(19) Europäisches Patentamt / European Patent Office / Office européen des brevets

(11) **EP 4 554 157 A1**

(12) **EUROPEAN PATENT APPLICATION**
published in accordance with Art. 153(4) EPC

(43) Date of publication:
**14.05.2025 Bulletin 2025/20**

(21) Application number: 23839829.1

(22) Date of filing: **22.06.2023**

(51) International Patent Classification (IPC):
**H04L 27/26** *(2006.01)*   **H04L 27/20** *(2006.01)*
**H04L 5/00** *(2006.01)*   **H04J 11/00** *(2006.01)*
**H04W 72/23** *(2023.01)*

(52) Cooperative Patent Classification (CPC):
**H04J 11/00; H04L 5/00; H04L 27/20; H04L 27/26; H04W 72/23**

(86) International application number:
**PCT/KR2023/008713**

(87) International publication number:
**WO 2024/014735 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022 KR 20220086615**
**05.08.2022 KR 20220098059**

(71) Applicant: **Samsung Electronics Co., Ltd.**
**Suwon-si, Gyeonggi-do 16677 (KR)**

(72) Inventors:
• **LIM, Hyoungjin**
  **Suwon-si Gyeonggi-do 16677 (KR)**
• **SHIM, Seijoon**
  **Suwon-si Gyeonggi-do 16677 (KR)**
• **OH, Jongho**
  **Suwon-si Gyeonggi-do 16677 (KR)**

(74) Representative: **HGF**
**HGF Limited**
**1 City Walk**
**Leeds LS11 9DX (GB)**

(54) **ELECTRONIC DEVICE AND METHOD FOR PROVIDING REMOTE INTERFERENCE MANAGEMENT-REFERENCE SIGNAL IN FRONTHAUL INTERFACE**

(57) According to embodiments, a method performed by a radio unit (RU) may comprise an operation of receiving a control plane (C-plane) message including section extension information from a distributed unit (DU) through a fronthaul interface. The method may comprise an operation of receiving a user plane (U-plane) message including remote interference management (RIM)-reference signal (RS) symbols from the DU through the fronthaul interface. The method may comprise an operation of performing position adjustment for a cyclic prefix (CP) for the RIM-RS symbols and phase-difference compensation for the RIM-RS symbols. The section extension information may comprise at least one of indication information for indicating at least one of the RIM-RS symbols and compensation information related to the phase-difference compensation.

FIG. 9

## Description

### [Technical Field]

The present disclosure relates to a fronthaul interface. More specifically, the present disclosure relates to an electronic device and a method for providing a remote interference management-reference signal (RIM-RS) in the fronthaul interface.

### [Background Art]

As a transmission capacity increases in wireless communication systems, a function split that functionally divide base stations are being applied. According to the function split, base stations may be divided into a distributed unit (DU) and a radio unit (RU). A fronthaul interface is defined for communication between the DU and the RU.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to embodiments, a method performed by a radio unit (RU) may comprise receiving, from a distributed unit (DU) via a fronthaul interface, a control plane (C-plane) message including section extension information. The method may comprise receiving, from the DU via the fronthaul interface, a user plane (U-plane) message including remote interference management-reference signal (RIM-RS) symbols. The method may comprise performing a phase difference compensation for the RIM-RS symbols and a position adjustment of a cyclic prefix (CP) for the RIM-RS symbols. The section extension information may include at least one of indication information for indicating at least one of the RIM-RS symbols, or compensation information related to the phase difference compensation.

According to embodiments, a method performed by a distributed unit (DU) may comprise transmitting, to a radio unit (RU) via a fronthaul interface, a control plane (C-plane) message including section extension information. The method may comprise transmitting, to the RU via the fronthaul interface, a user plane (U-plane) message including RIM-RS symbols. The section extension information may be used to perform a phase difference compensation for the RIM-RS symbols and a position adjustment of a cyclic prefix (CP) for the RIM-RS symbols. The section extension information may include at least one of indication information for indicating at least one of the RIM-RS symbols or compensation information related to the phase difference compensation.

According to embodiments, an electronic device performed by a radio unit (RU) may comprise a fronthaul transceiver, at least one radio frequency (RF) transceiver, and at least one processor coupled to the fronthaul transceiver and the at least one RF transceiver. The at least one processor may be configured to receive, from a distributed unit (DU) via a fronthaul interface, a control plane (C-plane) message including section extension information. The at least one processor may be configured to receive, from the DU via the fronthaul interface, a user plane (U-plane) message including remote interference management-reference signal (RIM-RS) symbols. The at least one processor may be configured to perform a phase difference compensation for the RIM-RS symbols and a position adjustment of a cyclic prefix (CP) for the RIM-RS symbols. The section extension information may include at least one of indication information for indicating at least one of the RIM-RS symbols, or compensation information related to the phase difference compensation.

According to embodiments, an electronic device performed by a Distributed Unit (DU) may comprise at least one transceiver including a fronthaul transceiver, and at least one processor coupled to the at least one transceiver. The at least one processor may be configured to transmit, to a radio unit (RU) via a fronthaul interface, a control plane (C-plane) message including section extension information. The at least one processor may be configured to transmit, to the RU via the fronthaul interface, a user plane (U-plane) message including RIM-RS symbols. The section extension information may be used to perform a phase difference compensation for the RIM-RS symbols and a position adjustment of a cyclic prefix (CP) for the RIM-RS symbols. The section extension information may include at least one of indication information for indicating at least one of the RIM-RS symbols or compensation information related to the phase difference compensation.

According to embodiments, a non-transitory computer-readable medium is provided. The non-transitory computer-readable medium may comprise a memory storing a program including instructions. The instructions, when executed by a processor, cause a distributed unit (DU) to receive, from a distributed unit (DU) via a fronthaul interface, a control plane (C-plane) message including section extension information. The instructions, when executed by the processor, cause the DU to receive, from the DU via the fronthaul interface, a user plane (U-plane) message including remote interference management-reference signal (RIM-RS) symbols. The instructions, when executed by the processor, cause the DU to perform a phase difference compensation for the RIM-RS symbols and a position adjustment of a cyclic prefix (CP) for the RIM-RS symbols. The section extension information may include at least one of indication information for indicating at least one of the RIM-RS symbols, or compensation information related to the phase difference compensation.

According to embodiments, a non-transitory computer-readable medium is provided. The non-transitory computer-readable medium may comprise a memory storing a program including instructions. The instructions, when executed by a processor, cause a radio unit (RU) to transmit, to the RU via a fronthaul interface, a control plane (C-plane) message including section extension information. The instructions, when executed by the processor, cause the RU to transmit, to the RU via the fronthaul interface, a user plane (U-plane) message including RIM-RS symbols. The section extension information may be used to perform a phase difference compensation for the RIM-RS symbols and a position adjustment of a cyclic prefix (CP) for the RIM-RS symbols. The section extension information may include at least one of indication information for indicating at least one of the RIM-RS symbols or compensation information related to the phase difference compensation.

**[Description of the Drawings]**

FIG. 1 illustrates a wireless communication system according to embodiments.

FIG. 2A illustrates a fronthaul interface according to embodiments.

FIG. 2B illustrates a fronthaul interface of an open (O)-radio access network (RAN) according to embodiments.

FIG. 3A illustrates a functional configuration of a distributed unit (DU) according to embodiments.

FIG. 3B illustrates a functional configuration of a radio unit (RU) according to embodiments.

FIG. 4 illustrates an example of a function split between a DU and an RU according to embodiments.

FIG. 5 illustrates an example of remote interference according to embodiments.

FIGS. 6A, 6B, and 6C illustrate examples of remote interference management according to embodiments.

FIG. 7 illustrates an example of a remote interference management (RIM)-reference signal (RS) structure according to embodiments.

FIG. 8A illustrates an example of a functional configuration for RIM-RS transmission according to embodiments.

FIG. 8B illustrates an example of RIM-RS symbol processing according to embodiments.

FIG. 9 illustrates an example of a functional configuration for each network entity for modulation compression (MC)-based RIM-RS transmission according to embodiments.

FIG. 10 illustrates an example of signaling between a DU and an RU for modulation compression (MC)-based RIM-RS transmission, through section extension information of a control plane (C-plane) message according to embodiments.

FIG. 11 illustrates an example of section extension information of a C-plane message for MC-based RIM-RS transmission according to embodiments.

FIG. 12 illustrates an example of signaling between a DU and an RU for MC-based RIM-RS transmission through a C-plane message according to embodiments.

FIG. 13 illustrates an example of a C-plane message for MC-based RIM-RS transmission according to embodiments.

FIG. 14 illustrates an example of signaling between a DU and an RU for MC-based RIM-RS transmission through a user plane (U-plane) message according to embodiments.

FIG. 15 illustrates an example of a U-plane message for MC-based RIM-RS transmission according to embodiments.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to signal (e.g., packet, message, signal, information, signaling), terms referring to resource (e.g.,

section, symbol, slot, subframe, radio frame, subcarrier, resource element (RE), resource block (RB), bandwidth part (BWP), occasion), terms referring to operation state (e.g., step, operation, procedure), terms referring to data (e.g., packet, message, user stream, information, bit, symbol, codeword), terms referring to channel, terms referring to network entity (e.g., distributed unit (DU), radio unit (RU), central unit (CU), CU-control plane(CP), CU-user plane(UP), open radio access network (O-RAN) DU (O-DU), O-RAN RU (O-RU), O-RAN CU (O-CU), O-RAN CU-CP (O-CU-UP), O-RAN CU-CP (O-CU-CP)), and terms referring to components of a device, used in the following description are exemplified for convenience of explanation. Therefore, the present disclosure is not limited to terms to be described below, and another term having an equivalent technical meaning may be used. In addition, a term such as '...unit, '...device, '...object, and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' refer to including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

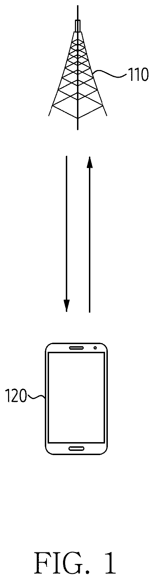

FIG. 1 illustrates a wireless communication system according to embodiments.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

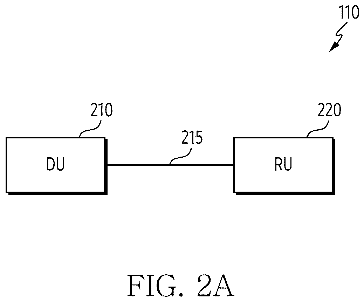

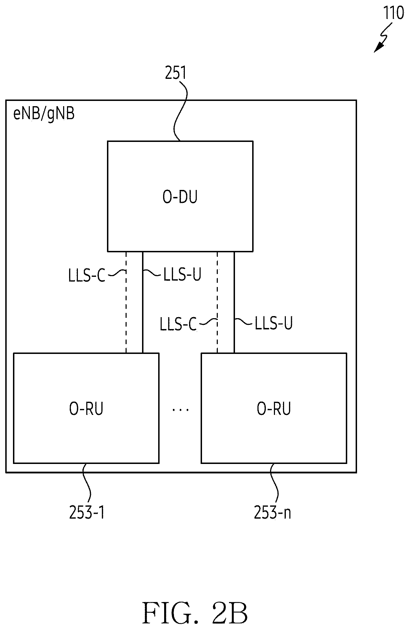

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, A structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface according to embodiments. Unlike a backhaul between a base station and a core network, the fronthaul refers to a section between entities between a radio access network (RAN) and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and a RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

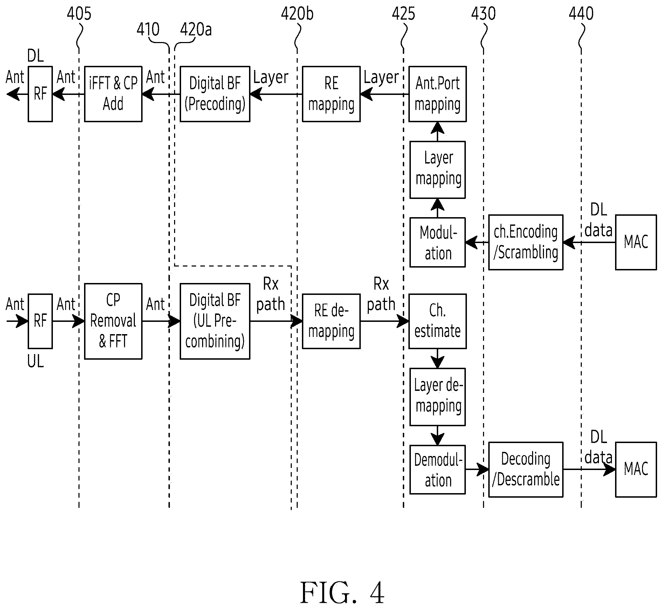

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), CP insertion (CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being be connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN) according to embodiments. As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

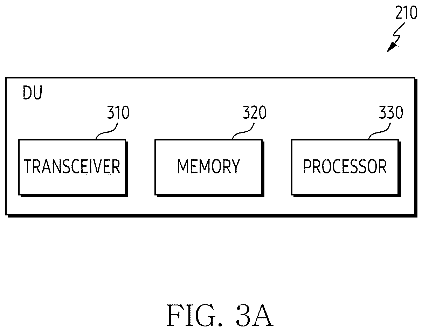

In FIG. 2B, entities of the base station 110 have been described as O-DU and O-RU to describe O-RAN. However, these designations are not to be construed as limiting the embodiments of the present disclosure. In embodiments described with reference to FIGS. 3A to 15, operations of the DU 210 may also be performed by the O-DU 251. A description of the DU 210 may be applied to the O-DU 251. Likewise, in embodiments described with reference to FIGS. 3A to 15, operations of the RU 220 may also be performed by the O-RU 253-1. A description of the RU 220 may be applied to the O-RU 253-1.

FIG. 3A illustrates a functional configuration of a distributed unit (DU) according to embodiments. A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

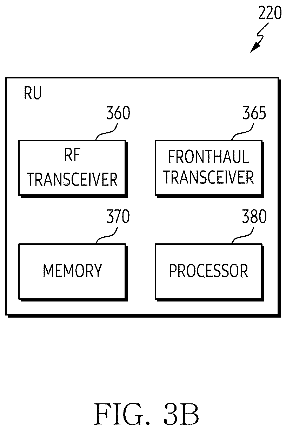

FIG. 3B illustrates a functional configuration of a radio unit (RU) according to embodiments. A configuration exemplified in FIG. 3B, which is as a part of a base station, may be understood as a configuration of the RU 220 of FIG. 2A or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 360 may transmit an RIM-RS. The RF transceiver 360 may transmit a first type of RIM-RS (e.g., RIM-RS type 1 of 3GPP) to inform the detection of remote interference. The RF transceiver 360 may transmit a second type of RIM-RS (e.g., RIM-RS type 2 of 3GPP) to inform the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 320. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, a first function split in which the RU performs the RF function, and the DU performs the PHY function is substantially such that the PHY function is not implemented within the RU, and, for example, may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/-scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

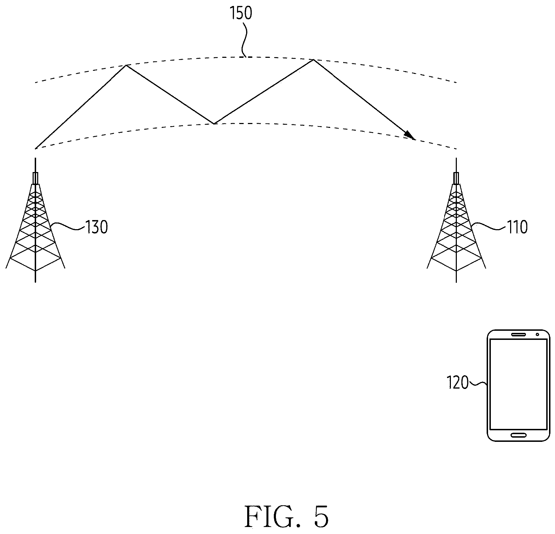

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in a RU of the fronthaul interface. For example, the lower-PHY may include FFT/iFFT, digital beamforming, physical random access channel (PRACH) extraction, and filtering. However, the above-described criteria do not exclude embodiments through other function splits. Functional configurations, signaling, or operations of FIGS. 5 to 15 described below may be applied not only to the third function split 420a or the fourth function split 420b, but also to other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.

    1) ecpriVersion (4 bits): This parameter indicates an eCPRI protocol version.
    2) ecpriReserved (3 bits): This parameter is reserved for further use of eCPRI.
    3) ecpriConcatenation (1 bit): This parameter indicates when eCPRI concatenation is in use.
    4) ecpriMessage (1 byte): This parameter indicates a type of a service carried by a message type. For example, the parameter indicates an IQ data message, a real-time control data message, or a transport network delay measurement message.
    5) ecpriPayload (2 bytes): This parameter indicates a byte size of a payload portion of the eCPRI message.
    6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
    7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier 'BandSector _ID', a component carrier identifier 'CC_ID', a spatial stream identifier 'RU_Port_ID', and a distributed unit identifier 'DU_Port_ID'. The bit allocation of the eAxC ID may be distinguished as follows.

1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.

2) BandSector_ID: Aggregated cell identifier (identification of band and sector supported by O-RU).

3) CC_ID: CC_ID identifies carrier components supported by the O-RU.

4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A messages in the control plane, that is, the C-plane messages, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes by Section Type are as follows.

1) sectionType=0: Used to indicate resource blocks or symbols not used in the DL or the UL.

2) sectionType=1: Used for most DL/UL wireless channels. Herein, "most" refers to channels that do not require time or frequency offsets such as those required for mixed numerology channels.

3) sectionType=2: reserved for further use

4) sectionType=3: PRACH and mixed-numerology channels. Channels that require time or frequency offsets or differ from the nominal SCS value(s).

5) sectionType=4: reserved for further use

6) sectionType=5: UE scheduling information. Transmits UE scheduling information so that the RU can perform real-time BF weight calculation (O-RAN optional BF method)

7) sectionType=6: Transmit UE-specific channel information. Periodically transmits UE channel information so that the RU can perform real-time BF weight calculation (O-RAN optional BF method)

8) sectionType=7: Used for LAA support

9) sectionType=8: Used for ACK/NACK Feedback

The present disclosure provides an electronic device and a method for providing a remote interference management (RIM)-reference signal (RS) via a modulation compression (MC) technique on a fronthaul interface.

Additionally, the present disclosure provides a device and a method for processing RIM-RS symbols in a radio unit (RU) via a management plane (M-plane) message from a distributed unit (DU) on the fronthaul interface.

Additionally, the present disclosure provides a device and a method for processing RIM-RS symbols in the RU via a control plane (C-plane) message from the DU on the fronthaul interface.

Additionally, the present disclosure provides a device and a method for processing RIM-RS symbols in the RU via a user plane (U-plane) message from the DU on the fronthaul interface.

Additionally, the present disclosure provides a device and a method for processing RIM-RS symbols in the RU via section extension information from the DU on the fronthaul interface.

An electronic device and a method according to the embodiments of the present disclosure enable a remote interference management (RIM)-reference signal (RS) transmitted through a modulation compression (MC) technique to be processed in a radio unit (RU), by providing information on a phase compensation on a fronthaul interface.

The effects that can be obtained from the present disclosure are not limited to those described above, and any other effects not mentioned herein will be clearly understood by those having ordinary knowledge in the art to which the present disclosure belongs, from the following description.

FIG. 5 illustrates an example of remote interference, according to embodiments.

Referring to FIG. 5, FIG. 5 illustrates a base station 110 and a terminal 120 as a portion of nodes that utilize a wireless channel in a wireless communication system.

The base station 110 is a network infrastructure that provides wireless access to the terminal 120. The base station 110 has coverage defined based on a distance at which a signal may be transmitted. The base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings, in addition to the base station.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 5, the terminal 120 and another terminal may perform communication through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device that performs machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

In a time duplex division (TDD) communication scheme, the uplink channel and the downlink channel may use the same frequency band. At this time, since interference between channels occurs if downlink communication and uplink communication overlap in a time domain, downlink communication and uplink communication use different time resources. A combination of time resources for TDD communication may be referred to as a TDD pattern. A downlink period of the TDD pattern may be set. The downlink period may be set based on at least one of one or more slots or one or more symbols. The downlink period may be set based on one or more slots. The downlink period may be set based on one or more symbols. The downlink period may be set based on one or more slots and one or more symbols. In addition, an uplink period of the TDD pattern may be set. The uplink period may be set based on at least one of one or more slots or one or more symbols. The uplink period may be set based on one or more slots. The uplink period may be set based on one or more symbols. The uplink period may be set based on one or more slots and one or more symbols.

In the TDD communication system, a flexible period of the TDD pattern may be operated for switching between the downlink period and the uplink period. The flexible period may also be referred to as a guard period. In general, the flexible period is set in consideration of a propagation speed of a wireless signal and a typical path loss, but a propagation range of a wireless signal may increase under a certain climatic condition. For example, since a downlink signal 150 transmitted on a cell of a base station 130 located far from a base station 110 is transmitted for a long time, it may be received during an uplink period of another cell, beyond the guard period. In this case, the downlink signal 150 may act as interference to the uplink transmission of the terminal 120 on the cell of the base station 110. Herein, the base station 130 transmitting the downlink signal 150 may be referred to as an aggressor node. The cell of the base station 130 may be referred to as an aggressor cell. The base station 110 may be referred to as a victim node. The cell of the base station 110 may be referred to as a victim cell. The interference may be referred to as remote interference, time-of-flight (TOF) interference, long-distance cell interference, propagation delay interference, or self-interference. In the TDD communication system, the quality of uplink communication may be deteriorated by such remote interference.

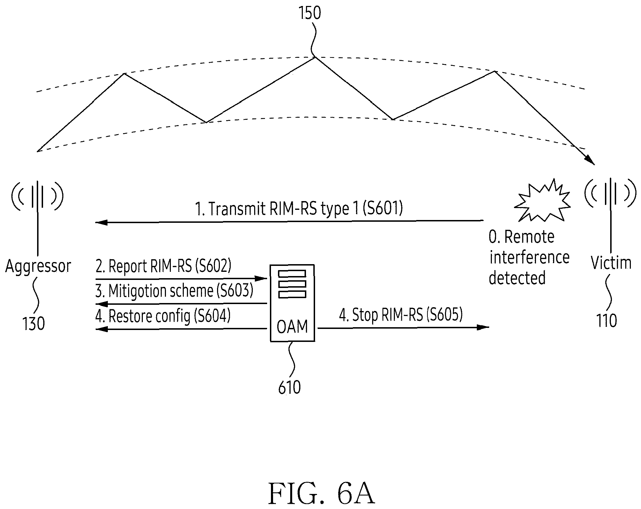

In case that the downlink signal 150 of another base station 130 flows into the uplink transmission period of the base station 110, an uplink signal transmitted at relatively low output may be vulnerable to interference (i.e., remote interference) due to the downlink signal 150. Therefore, a method for measuring the remote interference and controlling the remote interference is required. In the 5G NR system, a remote interference management-reference signal (RIM-RS) has been introduced to detect the above-described remote interference and control the interference. Hereinafter, examples of remote interference detection and interference control based on the RIM-RS are described in FIGS. 6A to 6C.

FIGS. 6A to 6C illustrate examples of remote interference management according to embodiments. Frameworks for remote interference handling are described through FIGS. 6A to 6C. A difference between the frameworks is a location of a decision to apply interference mitigation in a network, and a way of delivering the decision between nodes. Hereinafter, three frameworks are exemplified, but other framework variations may be easily considered, and artificial intelligence and machine learning may be used for the framework.

Referring to FIG. 6A, an operation and management (OAM) device 610 may perform all decisions related to remote interference mitigation in a centralized remote interference management framework. If remote interference is detected, the base station 110, which is a victim node, may transmit a first type of RIM-RS (S601). The first type corresponds to RIM-RS type 1 of 3GPP. The first type of RIM-RS may not only indicate that a cell is experiencing remote interference, but may also include information on the ID of a node (or node group) transmitting a reference signal and the number of orthogonal frequency division multiplexing (OFDM) symbols in the affected uplink period. The information may be implicitly encoded in the RIM-RS. Since the atmosphere duct is mutual, the base station 130 providing an aggressor cell contributing to the remote interference of a victim may receive the RIM-RS.

Upon receiving the RIM-RS, the base station 130, which is an aggressor node, may report the detected RIM-RS to the OAM device 610 (S602). For further determination on how to resolve the interference problem, the base station 130 may transmit the detected RIM-RS, which includes information encoded in the RIM-RS, to the OAM device 610. The OAM device 610 may transmit a command indicating a change in the TDD pattern to the base station 130 (S603). The OAM device 610 may take a decision on a suitable mitigation scheme, which requests the aggressor cell to stop downlink transmission earlier in order to extend the guard period. Thereafter, if the ducting phenomenon disappears, the base station 130 no longer detects the RIM-RS. The base station 130 may transmit a report on interference elimination to the OAM device 610. The OAM device 610 may command the base station 110 to stop the RIM-RS transmission (S605). In addition, the OAM device 610 may request the base station 130 to restore the previous configuration of the TDD pattern (S604). The operation S604 may be performed independently of the operation S605.

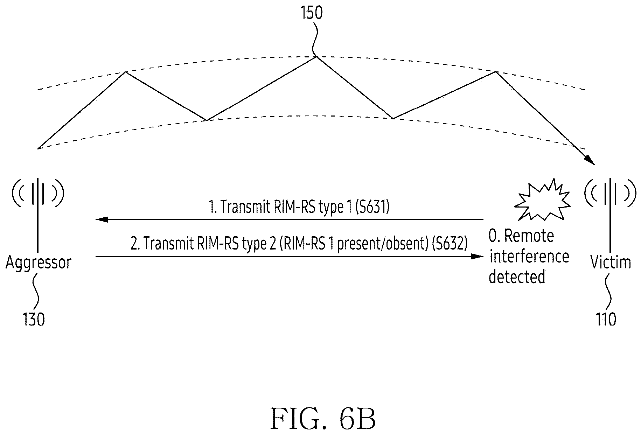

Referring to FIG. 6B, if remote interference is detected, the base station 110, which is a victim node, may transmit the first type of RIM-RS (S631). If the base station 130, which is an aggressor node, receives the first type of RIM-RS, the base station 130 may identify that the base station 110 is experiencing remote interference. The base station 130 may transmit a second type of RIM-RS to the base station 110 (S633). The second type corresponds to RIM-RS type 2 of 3GPP. The base station 130 may transmit, to the base station 110, a radio signal to notify that it has received the first type of RIM-RS and applied a suitable mitigation plan. The base station 110 receiving the second type of RIM-RS may detect whether remote interference is present. If the base station 110 does not detect the second type of RIM-RS, the base station 110 may identify the disappearance of remote interference. The base station 110 may stop transmitting the first type of RIM-RS. Thereafter, the base station 130, which is an aggressor node, may restore the pattern configuration before the interference detection, based on identifying that the first type of RIM-RS is no longer received.

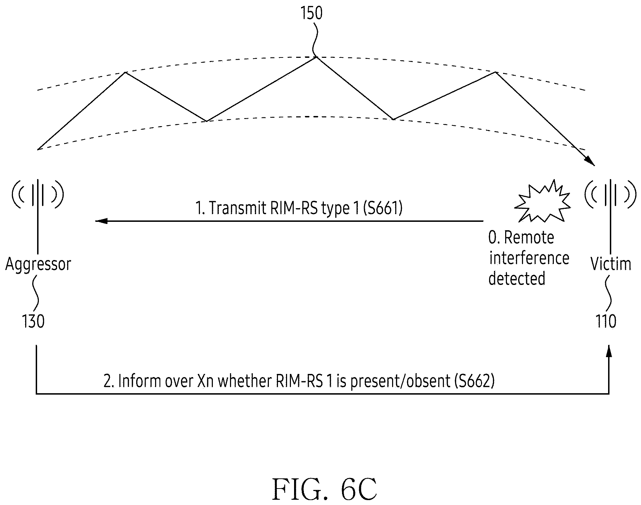

Referring to FIG. 6C, if remote interference is detected, the base station 110, which is a victim node, may transmit the first type of RIM-RS (S631). If the base station 130, which is an aggressor node, receives the first type of RIM-RS, the base station 130 may identify that the base station 110 is experiencing remote interference. The base station 130 may transmit a backhaul signal to the base station 110 through an Xn interface (S633). The backhaul signal through the Xn interface may be used to inform the base station 110 of the presence or absence of the first type of RIM-RS in the base station 130. The backhaul signal indicating the absence of the first type of RIM-RS may be used to determine that remote interference is no longer present and to stop transmission of the first type of RIM-RS. The base station 130, which is an aggressor node, may restore the pattern configuration before the interference detection, based on identifying that the first type of RIM-RS is no longer received.

As described above, the base station may transmit the RIM-RS to manage remote interference. The victim node may transmit the first type of RIM-RS (e.g., RIM-RS type 1 of 3GPP). The first type of RIM-RS may be used to indicate that the remote interference is present in the victim cell, that is, to inform that the ducting phenomenon is present. In a specific framework (e.g., the framework of FIG. 2B), the aggressor node may transmit the second type of RIM-RS (e.g., RIM-RS type 2 of 3GPP). The second type of RIM-RS may be used to inform that the ducting phenomenon is present in the victim cell. Unlike the first type of RIM-RS, the second type of RIM-RS may not transmit additional information (e.g., the number of symbols). The description of a RIM-RS structure described below may be applied to the first type of RIM-RS and the second type of RIM-RS.

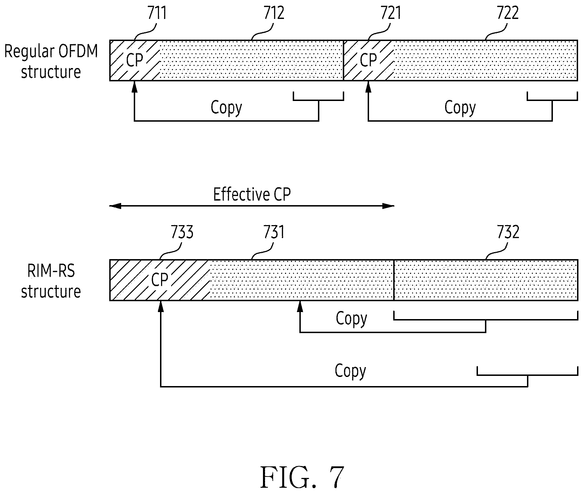

FIG. 7 illustrates an example of a remote interference management (RIM)-reference signal (RS) structure according to embodiments. The RIM-RS is for informing remote interference, and a RIM-RS structure is required to be capable of detecting the RIM-RS without OFDM symbol synchronization between an aggressor and a victim.

Referring to FIG. 7, a structure of a regular OFDM symbol may include a data symbol and a cyclic prefix (CP). Here, the regular OFDM symbol means a symbol used to transfer bits of other NR channels (e.g., physical downlink shared channel (PDSCH), physical downlink control channel (PDCCH), physical uplink shared channel (PUSCH), physical uplink control channel (PUCCH)) other than the RIM-RS. The data symbol means a complex symbol corresponding to a data payload and on which complex mapping has been performed. For example, a first OFDM symbol may include a CP 711 and a data symbol 712. The CP 711 corresponds to one or more samples of the data symbol 712. The symbol 712 means a complex symbol on which complex mapping has been performed. A second OFDM symbol may include a CP 721 and a data symbol 722. The CP 721 corresponds to one or more samples of the data symbol 722.

The RIM-RS may be transmitted via two consecutive symbols. The two consecutive symbols may include a first RIM-RS symbol 731 and a second RIM-RS symbol 732. Here, the symbol means a complexed-value symbol corresponding to bits, not a resource length including a CP. A useful part of each symbol may be the same. The useful part means a data payload. The data symbol of the first RIM-RS symbol 731 and the data symbol of the second RIM-RS symbol 732 may be the same. Unlike a transmission structure of the general OFDM symbol, in the RIM-RS, instead of the CP being located in a front end of each symbol, a RIM-RS CP 733 may be located in front of the first symbol 731, which is located in front among the two symbols. The copied samples used for the RIM-RS CP 733 are located at an end portion of the second symbol of RIM-RS. Since a length of CP is relatively long, detection of the RIM-RS is possible without estimating separate OFDM symbol timing.

In O-RAN, various types of compression techniques may be used within each section to improve data transmission efficiency between the DU and the RU. The compression techniques include, for example, a no-compression technique, a block floating point compression (BFPC) technique, and a modulation compression (MC) technique. The IQ data frame of the O-RAN standard may include a user data compression header (e.g., udCompHdr). The user data compression header is defined and transmitted by a bit width (e.g., 4-bit 'udIqWidth') and a compression method (e.g., 4-bit 'udCompMeth'). For example, the compression method may be defined as illustrated in the table below.

[Table 1]

| udCompMeth | compression method | udIqWidth meaning |
|---|---|---|
| 0000b | no compression | bitwidth of each uncompressed I and Q value |
| 0001b | Block floating point (BFP) | bitwidth of each I and Q mantissa value |
| 0010b | Block scaling | bitwidth of each I and Q scaled value |
| 0011b | $\mu$ -law | bitwidth of each compressed I and Q value |
| 0100b | Modulation compression | bitwidth of each compressed I and Q value |
| 0101b | BFP +selective RE sending | bitwidth of each compressed I and Q value |
| 0110b | Mod-compr + selective RE sending | bitwidth of each compressed I and Q value |
| 0111b-1111b | Reserved for further methods | depends on the specific compression method |

Among the compression techniques described above, the MC technique is a lossless method, there is no data loss, and the compression efficiency is high. The MC technique relies on a characteristic that a modulated data symbol may be represented by a very limited number of bits of in-phase (I) component and bits of quadrature (Q) component. For example, a since a quadrature phase shift keying (QPSK)-modulated symbol has only two potential states of I and two potential states of Q, the QPSK modulated symbol may be represented with a single bit for the I component and a single bit for the Q component without information loss. For another example, a symbol modulated using 64 QAM may be represented with 3 bits for the I component and 3 bits for the Q component, in maximum.

For the I component of data in the U-plane message, 16 bits may be used. For the Q component of data in the U-plane message, 16 bits may be used. That is, 32 bits may be used for data transmission in the U-plane message. If the QPSK modulation is used for modulation compression, the number of transmitted bits may be reduced from 32 bits to 2 bits. If 16 QAM modulation is used for modulation compression, the number of transmitted bits may be reduced from 32 bits to 4 bits. If 64 QAM modulation is used for modulation compression, the number of transmitted bits may be reduced from 32 bits to 6 bits

In order to represent values of the I component and the Q component that may allow overlapping of multiple constellation sizes capable of being represented as a single word-width, constellations may be "moved" so that twos-complement may indicate each constellation point. For example, the QPSK constellation points may move by -1/2. The I component may be -1 or 0. The Q component may be -1 or 0. In addition, for example, 16 QAM constellation points may move by -1/4. The I component may be -1, -1/2, 0, and 1/2. The Q component may be -1, 1/2, 0, or 1/2. In addition, for example, 64 QAM constellation points may move by -1/8. The I component may be -1, -3/4, -1/2, -1/4, 0, 1/4, 1/2, or 3/4. The Q component may be -1, -3/4, -1/2, -1/4, 0, 1/4, 1/2, or 3/4.

The MC technique converts bit-level information into a shifted constellation point (SCP). The DU may transmit the U-plane message including the converted information according to the SCP to the RU. The DU may transmit, to the RU, a constellation shift flag (csf) to indicate whether it is shifted. For example, 'csf may be defined as illustrated in Table 2.

[Table 2]

| udIqWidth | Shift value |
|---|---|
| 1 | 1/2 |
| 2 | 1/4 |
| 3 | 1/8 |
| 4 | 1/16 |
| 5 | 1/32 |

The data compressed according to the MC technique does not indicate an actual power value. The DU may transmit a modulation compression scale value (modCompScaler) to the RU so that the RU may set a power level on the modulated compressed data. The 'modCompScaler' parameter refers to a scale factor to be applied to an unshifted constellation point during decompression. In the O-RAN standard, the 'modCompScaler' parameter may be provided to the RU through section extension information (e.g., Section Extension Type 4). The 'modCompScaler' parameter may indicate an exponent component and a mantissa component through the following equation.

[Equation 1]

$$"mantissa" = \sum_{k=0}^{10} modCompScaler[k] \cdot 2^{k-11}$$
$$"exponent" = \sum_{k=11}^{14} modCompScaler[k] \cdot 2^{k-11}$$

The 'mantissa' indicates the mantissa component of an indicated value. The 'exponent' indicates the exponent component of an indicated value. The 'modCompScaler[k]' indicates a (k+1)th bit of the 'modCompScaler' parameter. For example, 'modCompScaler[0]' indicates a first bit of the 'modCompScaler' parameter. The 'modCompScaler [14]' indicates a 15th bit of the 'modCompScaler' parameter.

Among the 15 bits of the 'modCompScaler' parameter, the most significant 4-bit indicates the exponent component, and among the 15 bits of the 'modCompScaler' parameter, the least significant 11-bit indicates the mantissa component. Therefore, a value indicated by the 'modCompScaler' parameter is as shown in the following equation.

[Equation 2]

$$modCompScaler = mantissa \cdot 2^{-exponent}$$

The 'mantissa' indicates the mantissa component of an indicated value. The 'exponent' indicates the exponent component of an indicated value.

Section Extension 4 of the O-RAN standard, which transfers the 'modCompScaler' parameter, is as shown in the table below.

[Table 3]

| ef | extType = 0x04 | 1 | Octet N |
|---|---|---|---|
| cxtLen = 0x01 (1 word) | | 1 | N+1 |
| csf | modCompScaler[14:81 | 1 | N+2 |
| modCompScaler[7:0] | | 1 | N+3 |

The DU may transfer modulation compression power scale RE mask (mcScaleReMask) to the RU. The 'mcScaleReMask' parameter may indicate a location of the RE, along with same scaling and modulation type within PRB.

The 'mcScaleOffset' parameter indicates a scale factor to be applied to an unshifted constellation point during decompression. In the O-RAN standard, the 'mcScaleOffset' parameter may be provided to the RU via section extension information (e.g. Section Extension Type 4). The 'mcScaleOffset' parameter may indicate the exponent components and the mantissa component via the following Equation.

[Equation 3]

$$"mantissa" = \sum_{k=0}^{10} mcScaleOffset[k] \cdot 2^{k-11}$$

$$"exponent" = \sum_{k=11}^{14} mcScaleOffset[k] \cdot 2^{k-11}$$

The 'mantissa' indicates the mantissa component of an indicated value. The 'exponent' indicates the exponent component of an indicated value. The 'mcScaleOffset[k]' indicates a (k+1)th bit of the 'mcScaleOffset' parameter. For example, 'mcScaleOffset[0]' indicates a first bit of the 'mcScaleOffset' parameter. The 'mcScaleOffset[14]' indicates a 15th bit of the 'mcScaleOffset' parameter.

Among the 15 bits of the 'mcScaleOffset' parameter, the most significant 4 bit indicates the exponent component, and among the 15 bits of the 'mcScaleOffset' parameter, the least significant 11 bit indicates the mantissa component. Therefore, a value indicated by the 'mcScaleOffset' parameter is as shown in the Equation below.

[Equation 4]

$$mcScaleOffset = mantissa \cdot 2^{-exponent}$$

The 'mantissa' indicates the mantissa component of an indicated value. The 'exponent' indicates the exponent component of an indicated value.

Section Extension 5 of the O-RAN standard, which transfers the 'mcScaleOffset' parameter, is as shown in the tables below. Table 4 indicates one scaler value, and Table 5 indicates two scaler values.

[Table 4]

| ef | extType = 0x05 | | 1 | Octet N |
|---|---|---|---|---|
| extLen = 0x2 (2 words) | | | 1 | N+1 |
| mcScaleReMask[11:4] | | | 1 | N+2 |
| meScaleRe-Mask[3:0] | csf | mcScaleOffset [14:12] | 1 | N+3 |
| mcScaleOffset [11:4] | | | 1 | N+4 |
| meScaleOffset [3:0] | zero padding | | 1 | N+5 |
| zero padding | | | 1 | N+6 |
| zero padding | | | 1 | N+7 |

[Table 5]

| ef | extType = 0x05 | | 1 | Octet N |
|---|---|---|---|---|
| extLen = 0x03 (3 words) | | | 1 | N+1 |
| mcScaleReMask[11:4] | | | 1 | N+2 |
| mcScaleReMask [3:0] | csf | mcScaleOffset [14:12] | 1 | N+3 |
| mcScaleOffset [11:4] | | | 1 | N+4 |
| mcScaleOffset [3:0] | mcScaleReMask[11:8] | | 1 | N+5 |
| mcScaleReMask[7:0] | | | 1 | N+6 |
| csf | mcScaleOffset [14:8] | | 1 | N+7 |
| mcScaleOffset [7:0] | | | 1 | N+8 |
| zero padding | | | 1 | N+9 |
| zero padding | | | 1 | N+10 |
| zero padding | | | 1 | N+11 |

The section extension information of Table 3 to Table 5 described above may be included in the C-plane message. The RU may restore the original signal intended in the DU, based on compressed data received through the U-plane message and parameters received through the C-plane message. According to an embodiment, the RU may obtain the original signal from the compressed bits based on the 'csf' parameter. According to an embodiment, the RU may obtain the original signal from the compressed bits based on the 'modCompScaler' parameter. According to an embodiment, the RU may obtain the original signal from the compressed bits based on the 'mcscaleoffset' parameter and the 'mcScaleReMask' parameter.

Hereinafter, the embodiments of the present disclosure propose a method for providing RIM-RS on a fronthaul interface through the above-described modulation compression (MC) technique. The RU may perform RIM-RS transmission from RIM-RS bit data compressed by the MC technique, based on at least some of the above-described parameters.

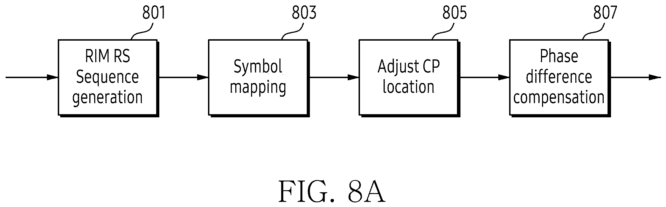

FIG. 8A illustrates an example of a functional configuration for RIM-RS transmission according to embodiments. An operation for the RIM-RS transmission may be implemented by network entities. The network entities described above may be DU and RU. At least a portion of operations for the RIM-RS transmission may be performed by the DU. At least another portion of operations for the RIM-RS transmission may be performed by the RU.

Referring to FIG. 8A, in operation 801, a RIM-RS sequence may be generated. The RIM-RS may be transmitted on a RIM-RS resource, which is defined by a triplet of indexes in a time domain, a frequency domain, and a sequence domain. The RIM-RS sequence may be generated based on a QPSK modulation of a pseudo-random sequence generated based on a gold sequence of a length $2^{31}$-1. Based on the triplet, a part of the QPSK-modulated gold sequence of length $2^{31}$-1 to be used for the RIM-RS, as well as an actual location in time and frequency, may be calculated.

In operation 803, symbol mapping may be performed. The symbol mapping means bit alignment and complex mapping. The complex mapping for the RIM-RS sequence may be performed. For example, in the QPSK modulation, the RIM-RS sequence may be aligned in units of two bits. The aligned unit corresponds to one symbol. The complex mapping may include constellation mapping of bits. The I component and the Q component of constellation points indicated to by bits may be obtained.

In operation 805, a position of the CP may be adjusted. The RIM-RS may be transmitted for the purpose of detecting remote interference between base stations when operating TDD in the NR. As described through FIG. 7, the RIM-RS may be transmitted by the base station through two symbols. However, unlike the general OFDM structure, in the RIM-RS structure, the RIM-RS CP is positioned in front. Since a position of a CP of the RIM RS is different from a position of a CP of the general OFDM symbol, it is required to adjust the position of the CP when generating the RIM RS symbol. According to an embodiment, a position adjustment of the CP may be performed through a cyclic shift in a time domain. In addition, according to an embodiment, the position adjustment of the CP may be performed through a phase rotation on the RIM-RS symbol data in a frequency domain.

In operation 807, a phase difference compensation may be performed. In addition, in the 5G NR standard, a phase of a carrier frequency is standardized to be adjusted to 0 degrees to enable channel estimation even if a terminal receives in a carrier frequency different from the carrier frequency of the base station. Due to a difference between a carrier frequency f0 of a general NR channel and a carrier frequency of the RIM-RS (e.g., reference point (f0RIM)), a compensation of a phase difference for the start point of the OFDM symbol may be required. The position compensation for each of the first RIM-RS symbol and the second RIM-RS symbol may be performed.

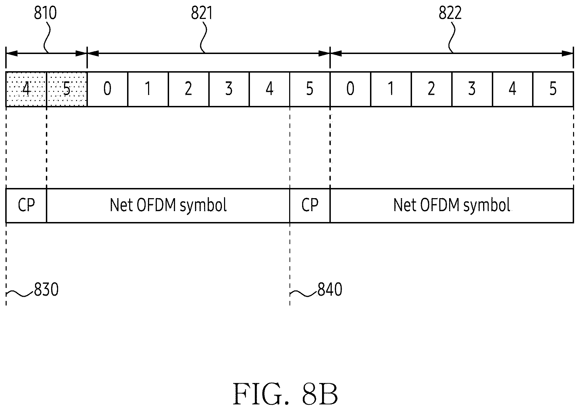

FIG. 8B illustrates an example of RIM-RS symbol processing according to embodiments. RIM-RS symbol processing may include a position adjustment of CP and a phase difference compensation for RIM-RS symbols.

Referring to FIG. 8B, the RIM-RS 800 may include a RIM-RS CP 810, a first RIM-RS symbol 821, and a second RIM-RS symbol 823. For example, the first RIM-RS symbol 821 may include six sample groups. Each sample group may include one or more time samples. The first RIM-RS symbol 821 may include sample group #0, sample group #1, sample group #2, sample group #3, sample group #4, and sample group #5. The second RIM-RS symbol 823 may include six sample groups. The second RIM-RS symbol 823 may include sample group #0, sample group #1, sample group #2, sample group #3, sample group #4, and sample group #5. The sample groups of the second RIM-RS symbol 823 may be the same as the sample groups of the first RIM-RS symbol 821. The RIM-RS CP 810 may be configured to be longer than a CP length of the general OFDM symbol. For example, the RIM-RS CP 810 may include some sample groups (e.g., sample groups #4 and #5) among the sample groups of the second RIM-RS symbol 823.

According to embodiments, the RU 220 may perform a position adjustment of a CP. A CP inserter for a general OFDM symbol inserts one sample group of the data symbol in front. Herein, the general OFDM symbol means a symbol used to transfer bits of another NR channel (e.g., physical downlink shared channel (PDSCH), physical downlink control channel (PDCCH), physical uplink shared channel (PUSCH), or physical uplink control channel (PUCCH)) except for the RIM-RS. However, unlike the general OFDM symbol, the RIM-RS CP 810 for the first RIM-RS symbol 821 and the second RIM-RS symbol 823 is positioned in a front end of the first RIM-RS symbol 821. Accordingly, the RU 220 may adjust the position of the CP so that two sample groups (e.g., sample group #4, sample group #5) move rather than one sample group.

According to embodiments, the RU 220 may perform a phase difference compensation for each symbol. Herein, the phase difference compensation means an operation of compensating for a phase difference caused by a difference in a carrier frequency of a general NR channel and a carrier frequency of the RIM-RS. At a first time point 830, the RU 220 may perform a phase difference compensation for the first RIM-RS symbol 821. At a second time point 840, the RU 220 may perform a phase difference compensation for the second RIM-RS symbol 822.

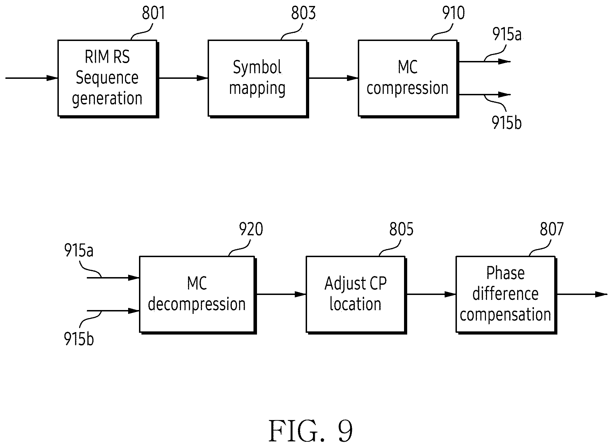

FIG. 9 illustrates an example of a functional configuration for each network entity for modulation compression (MC)-based RIM-RS transmission according to embodiments. Operation for RIM-RS transmission may be implemented by network entities. The above-described network entities may be DU and RU. At least a portion of the operations for RIM-RS transmission may be performed by the DU. At least another portion of the operations for RIM-RS transmission may be performed by the RU. The DU exemplifies the DU 210 of FIG. 2A. In an embodiment, the RU 220 may include O-DU 251. The RU exemplifies the RU 220 of FIG. 2A. In an embodiment, the RU 220 may include O-RU 253-1.

Referring to FIG. 9, operation 801, operation 803, and operation 910 may be related to the DU 210. The description of operation 801 and operation 803 may refer to FIG. 8.

In operation 801, the DU 210 may generate a RIM-RS sequence. The RIM-RS sequence may be generated based on a QPSK modulation of a pseudo-random sequence. The pseudo-random sequence may be generated based on a gold sequence of length $2^{31}$-1.

In operation 803, the DU 210 may perform symbol mapping. The DU 210 may perform symbol mapping based on the RIM-RS sequence. The symbol mapping may include constellation mapping. The DU 210 may obtain a I component and a Q component of constellation point indicated by bits of the RIM-RS sequence.

In operation 910, the DU 210 may perform MC compression. The MC compression technique is an IQ data compression technique. In the MC compression technique, the DU 210 may extract bits of I component and bits of Q component, which represent constellation to which a data symbol is mapped. That is, the DU 210 may obtain bits of I component and bits of Q component, which are results of symbol mapping. Since the MC compression is performed in the DU 210, data in limited constellation mapping may be transmitted on a fronthaul.

The DU 210 may transmit at least one parameter related to the MC compression via a C-plane message 915a. The at least one parameter may be used for MC decompression in the RU 220. For example, the at least one parameter may include a constellation shift flag (csf) to indicate whether shifting. Also, for example, the at least one parameter may include a modulation compression scale value (modCompScaler). Also, for example, the at least one parameter may include a modulation compression power scale RE mask (mcScaleReMask). Also, for example, the at least one parameter may include a scaling value for modulation compression (scalingmcScaleOffset). The DU 210 may transmit the C-plane message 915a to the RU 220.

The DU 210 may transmit data according to a result of MC compression through a U-plane message 915b. For example, the data may include bits indicating a modulation symbol for the RIM-RS. The DU 210 may transmit the U-plane message 915b to the RU 220.

The RU 220 may receive the C-plane message 915a from the DU 210. The RU 220 may receive the U-plane message 915b from the DU 210. Operation 803, operation 805, and operation 920 may be related to the RU 220. The description of operation 805 and operation 807 may refer to FIG. 8.

In operation 920, the RU 220 may perform MC decompression. The RU 220 may perform the MC decompression on data of the U-plane message 915b. For example, the DU 210 may restore bits indicating a modulation symbol for the RIM-RS to original data (e.g., 32-bit IQ sample data). The RU 220 may perform MC decompression based on the C-plane message 915a. After the MC decompression, the RU 220 may perform a position adjustment of a CP and a phase difference compensation.

In operation 805, the RU 220 may perform a position adjustment of a CP. In operation 807, the RU 220 may perform a phase difference compensation. Assuming that the MC compression is applied, only data in limited constellation mapping may be transmitted. If the position adjustment of a CP and the phase difference compensation are performed after resource mapping (i.e., RE mapping) in the DU, different phase values are obtained. However, it is difficult to provide the phase values in a scale format of a current O-RAN standard (e.g., Section Extension 4 (Table 3) or Section Extension 5 (Table 4 or Table 5) of the O-RAN standard). Therefore, the CP position adjustment and the phase difference compensation according to embodiments may be performed by the RU 220.

For processing the RIM-RS in the RU 220, that is, the position adjustment of the CP (e.g., operation 805) and the phase difference compensation (e.g., operation 807, it is necessary to determine whether it is the RIM-RS for transmitted data. In addition, it is required to specify which network entity (e.g., the DU 210 or the RU 220) will calculate a phase difference, which is a compensation target. According to which network entity calculates the phase difference, parameters in a message between the DU 210 and the RU 220 on a fronthaul interface may be newly defined. For example, the DU 210 may calculate a phase difference and transmit a compensation value according to a result of the calculation to the RU 220 through the M-plane message or the C-plane message. In addition, for example, the DU 210 may calculate a phase difference and transmit information on the phase difference to the RU 220 through the M-plane message or the C-plane message. The calculation for the compensation value may be performed in the RU 220. In addition, for example, the DU 210 may transmit a reference point of the RIM-RS and a system center frequency to the RU 220 through the M-plane message or the C-plane message, respectively. Thereafter, the calculation for the phase difference and the compensation value may be performed in the RU 220.

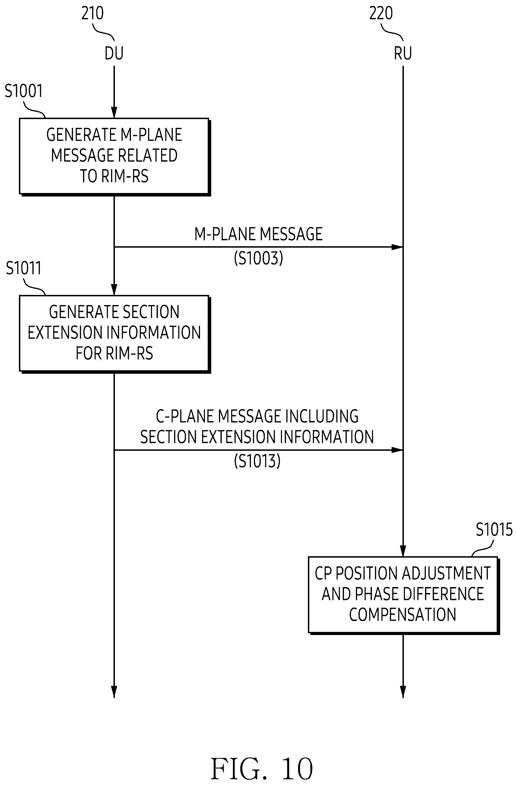

Hereinafter, embodiments of signaling between the DU and the RU required for processing the RIM-RS will be described in FIGS. 10 to 15, based on the above-described scenarios. In embodiments described later, a C-plane message of signaling between the DU and the RU may refer to the C-plane message 915a of FIG. 9. In embodiments described later, a U-plane message of signaling between the DU and the RU may refer to the C-plane message 915b of FIG. 9.

FIG. 10 illustrates an example of signaling between a DU and an RU for MC-based RIM-RS transmission, through section extension information of a C-plane message according to embodiments. If bit data of the RIM-RS is modulated based on the MC and then a modulated symbol is transmitted to the RU through a fronthaul interface, a position adjustment of a CP and a phase compensation are required in the RU. If the CP adjustment or the phase difference compensation is performed in the DU, RE data corresponds to different phase data values, and scaling is difficult with control parameters exemplified in Tables 3 to 5. The DU exemplifies the DU 210 of FIG. 2A. According to an embodiment, the RU 220 may include an O-DU 251. The RU exemplifies the RU 220 of FIG. 2A. According to an embodiment, the RU 220 may include an O-RU 253-1.

Referring to FIG. 10, in operation S1001, the DU 210 may generate an M-plane message related to the RIM-RS. The M-plane message may include various parameters related to the RIM-RS. All of parameters to be described later may be transmitted through the M-plane, or at least a portion of the parameters may be transmitted through the M-plane.

According to an embodiment, the M-plane message may include a parameter for indicating whether to support section extension information to be described below. For example, the M-plane message may indicate a point at which the DU 210 supports a CP position adjustment of the RU 220 and a phase difference compensation of the RU 220. In addition, for example, the M-plane message may indicate a point at which the DU 210 supports a MC-based RIM-RS transmission.

According to an embodiment, the M-plane message may indicate the network entity in which a calculation of the phase difference between the RIM-RS transmission and a general NR channel is performed when compensating the phase difference of the RU 220. The network entity may be the DU 210 or the RU 220. The RU 220 may identify a type of parameter to be received for RIM-RS processing from the DU 210, based on the M-plane message.

According to an embodiment, the M-plane message may include information on an in-phase/Quadrature (IQ) value for phase difference compensation. By the information on the IQ value, the phase difference compensation may be performed in the RU 220 according to a fixed IQ value. In case that the RU 220 does not perform the phase difference compensation according to a fixed IQ value, the information on the IQ value may not be included in the M-plane message.

According to an embodiment, the M-plane message may include information on a difference between a RIM-RS center frequency and a center frequency of a system bandwidth, which is a compensation target. In order for the RU 220 to calculate a value for the phase difference compensation, the DU 210 may transmit information on the difference between the RIM-RS center frequency and the center frequency of the system bandwidth to the RU 220 through the M-Plane message.

According to an embodiment, the M-plane message may include information on the RIM-RS center frequency. The DU 210 may transmit information on the RIM-RS center frequency through the M-Plane message so that the RU 220 may calculate the IQ value for phase difference compensation. In this case, the RU 220 may obtain the center frequency of the system bandwidth by another message (e.g., C-plane) or a specified setting. The RU 220 may perform the phase difference compensation based on the obtained center frequency of the system bandwidth and the RIM-RS center frequency.

According to an embodiment, the M-plane message may include information on the center frequency of the system bandwidth. The DU 210 may transmit information on the center frequency of the system bandwidth through the M-Plane message so that the RU 220 may calculate an IQ value for a phase difference compensation. In this case, the RU 220 may obtain a center frequency of the RIM-RS by another message (e.g., C-plane) or a specified setting. The RU 220 may perform the phase difference compensation based on the obtained center frequency of the RIM-RS and the center frequency of the system bandwidth.

In operation S1003, the DU 210 may transmit an M-plane message to the RU 220. The RU 220 may receive the M-plane message from the DU 210. FIG. 10 illustrates a transmission of the M-plane message for RIM-RS processing (e.g., the CP position adjustment and the RIM-RS phase difference compensation) of the RU 220, but embodiments of the present disclosure are not limited thereto. In alternative embodiments, the operation S1001 and the operation S1003 may be omitted.

In operation S1011, the DU 210 may generate section extension information for the RIM-RS. The section extension information for the RIM-RS may include at least one of information on a RIM-RS symbol or information on a phase difference compensation. According to an embodiment, the section extension information on the RIM-RS may include the information on the RIM-RS symbol. In addition, according to an embodiment, the section extension information for the RIM-RS may include the information on the phase difference compensation. In addition, according to an embodiment, the section extension information for the RIM-RS may include the information on the RIM-RS symbol and the information on the phase difference compensation.

The information on the RIM-RS symbol according to embodiments may indicate at least one RIM-RS symbol related to the section extension information among symbols for RIM-RS transmission. In addition, for example, the information on the RIM-RS symbol may indicate whether it is a RIM-RS symbol related to the section extension information. In addition, for example, the information on the RIM-RS symbol may indicate which symbol number it is among the symbols for the RIM-RS transmission.

The information on the phase difference compensation according to embodiments means an IQ value applied to compensate for the phase difference, which is changed due to a difference between a carrier frequency (i.e., reference point) of the RIM-RS and a carrier frequency (i.e., center frequency) of another NR channel (e.g., physical downlink shared channel (PDSCH), physical downlink control channel (PDCCH), physical uplink shared channel (PUSCH), physical uplink control channel (PUCCH)) except for the RIM-RS. The RIM-RS transmission may occupy two symbols. The phase difference may be independent according to whether it is a first RIM-RS symbol (hereinafter, first RIM-RS symbol) or a second RIM-RS symbol (hereinafter, first RIM-RS symbol) within the two symbols.

According to an embodiment, the information on the phase difference compensation may include a compensation value for the RIM-RS symbol. For example, the information on the phase difference compensation may include a compensation value for the first RIM-RS symbol. In addition, for example, the information on the phase difference compensation may include a compensation value for the second RIM-RS symbol. In addition, for example, the information on the phase difference compensation may include a compensation value for the first RIM-RS symbol and the second RIM-RS symbol.

According to an embodiment, the information on the phase difference compensation may include phase difference information for the RIM-RS symbol. For example, the information on the phase difference compensation may include phase difference information for the first RIM-RS symbol (hereinafter, first phase difference information). The first phase difference information may indicate a difference between a reference frequency for the first RIM-RS symbol and a carrier frequency of a current system bandwidth. In addition, for example, the information on the phase difference compensation may include phase difference information for the second RIM-RS symbol. The second phase difference information may indicate a difference between a reference frequency for the second RIM-RS symbol and a carrier frequency of a current system bandwidth. In addition, for example, the information on the phase difference compensation may include phase difference information for both the first RIM-RS symbol and the second RIM-RS symbol.

According to an embodiment, the information on the phase difference compensation may include a parameter for calculating a compensation value in the RU 220. For example, the information on the phase difference compensation may include information on the carrier frequency of RIM-RS transmission. In addition, for example, the information on the phase difference compensation may include information on the carrier frequency of the system bandwidth of the NR channel.

In operation S 1013, the DU 210 may transmit a C-plane message including the section extension information. The RU 220 may receive the C-plane message from the DU 210.

In operation S1015, the RU 220 may perform a position adjustment of a CP and a phase difference compensation. The RU 220 may perform the position adjustment of the CP. Unlike a general OFDM symbol structure, a transmission structure of the RIM-RS has a long CP. In addition, the CP for two RIM-RS symbols is disposed before the first RIM-RS symbol. Accordingly, the RU 220 may adjust a position of the CP. In a time domain, the RU 220 may perform the position adjustment of the CP through a cyclic shift of the RIM-RS symbol. In a frequency domain, the RU 220 may perform the position adjustment of the CP through a phase rotation of a symbol of the RIM-RS. For example, in order to implement the CP of the RIM-RS through a CP inserter for the general OFDM symbol structure, the RU 220 may perform the cyclic shift or the phase rotation by a length of some sample groups of RIM-RS symbols.

The RU 220 may perform a phase difference compensation. The RU 220 may perform the phase difference compensation on the RIM-RS symbol. The RU 220 may perform the phase difference compensation for each of two symbols for RIM-RS transmission. The RU 220 may perform the phase difference compensation for each RIM-RS symbol.

FIG. 10 illustrates only the M-plane message and the C-plane message, but the RU 220 may receive the U-plane message from the DU 210 before performing the position adjustment of the CP and the phase difference compensation for the RIM-RS. The RU 220 may receive IQ compression information of the RIM-RS modulated by the MC compression technique from the DU 210 through the U-plane message. The RU 220 may perform decompression on the IQ compression information based on the C-plane message. For example, the RU 220 may perform decompression based on the parameters of Tables 3 to 5 described above. The RU 220 may identify IQ data for the RIM-RS.

In FIG. 10, an embodiment of receiving a C-plane message including section extension information for RIM-RS after receiving an M-plane message related to RIM-RS has been described, but embodiments of the present disclosure are not limited thereto. The RU 220 may perform RIM-RS processing based on at least one of the M-plane message and the C-plane message. At least a portion of parameters for the position adjustment of the CP and the phase difference compensation of the RIM-RS may be transmitted through the C-plane message. At least another portion of parameters may be transmitted through the M-plane message. On the other hand, if all of the parameters for the position adjustment of the CP and the phase difference compensation of the RIM-RS are transmitted through the C-plane message, the M-plane message may be omitted. According to an embodiment, operations S1001 and S1003 may be omitted. The RU 220 may perform the position adjustment of the CP and the phase difference compensation for the RIM-RS, based on the C-plane message.

Although not illustrated in FIG. 10, according to an embodiment, the RU 220 may transmit, to the DU 210, capability information on whether to support new section extension information (i.e., MC-based RIM-RS transmission, or CP position adjustment and phase difference compensation for RIM-RS in the RU). In addition, according to an embodiment, the RU 220 may transmit, to the DU 210, capability information notifying that calculation of phase differences between the RIM-RS transmission and the general NR channels is possible. As well as the above-described embodiments, in addition to the above-described M-plane message, signaling for negotiating and transmitting required M-plane parameters may be performed on a fronthaul interface between the DU and the RU.

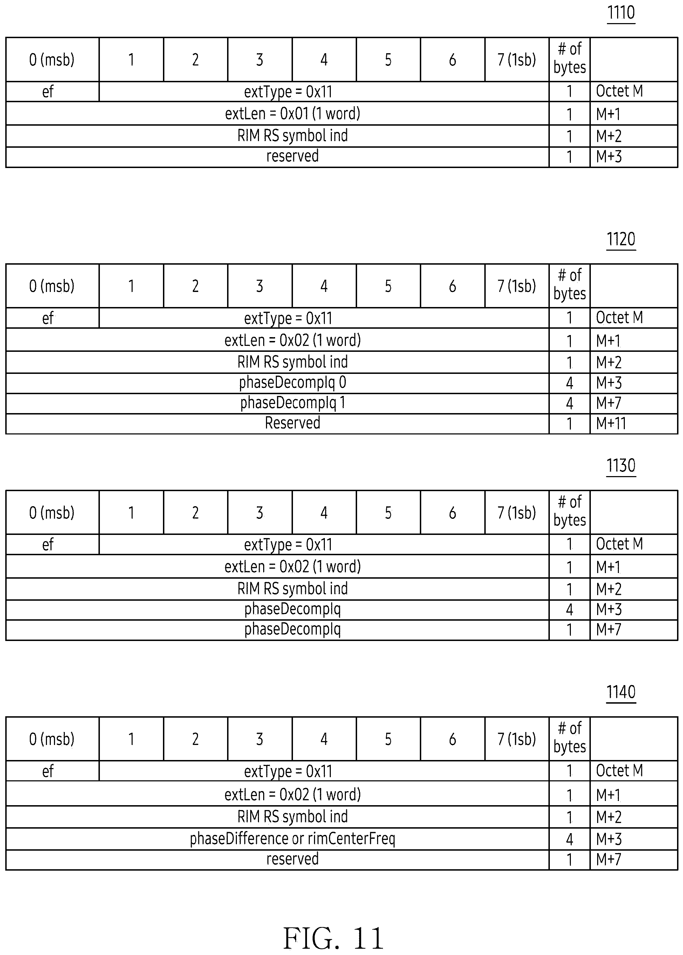

FIG. 11 illustrates an example of section extension information of a C-plane message for MC-based RIM-RS transmission according to embodiments. For RIM-RS processing in an RU, a new extension section may be defined. The DU may transmit, to the RU, a C-plane message including section extension information for MC-based RIM-RS transmission. The C-plane message including section extension information illustrated in FIG. 11 may be section extension information generated in operation S1011 of FIG. 10.

The section extension information for MC-based RIM-RS transmission according to embodiments may be used together with a section of a designated type of C-plane message. According to an embodiment, the section type of the C-plane message may be '1'. According to an embodiment, the section type of the C-plane message may be '3'. According to an embodiment, the section type of the C-plane message may be '5'.

Referring to FIG. 11, according to embodiments, section extension information 1110 may include RIM-RS symbol indication information. For example, section extension information 1110 may consist of 4 octets. The section extension information 1110 may include 'extType', providing an extension type. The section extension information 1110 may include an 'ef' indicating whether there is another extension present or whether a current extension field is the last extension. The section extension information 1110 may include 'extLen' providing a length of section extension in units of 32-bit (or 4-byte) words.

The RIM-RS symbol indication information 'rimrsSymbolInd' of the section extension information 1110 may indicate a RIM-RS symbol related to a corresponding section and the section extension information 1110. Two symbols may be required for RIM-RS transmission. The RIM-RS symbol indication information may indicate at least one of the two symbols. For example, the RIM-RS symbol indication information may indicate a first RIM-RS symbol (hereinafter, the first RIM-RS symbol) among the two symbols. For another example, the RIM-RS symbol indication information may indicate a second RIM-RS (hereinafter, the second RIM-RS symbol) among the two symbols. For still another example, the RIM-RS symbol indication information may indicate each of the two symbols, that is, the first RIM-RS symbol and the second RIM-RS symbol. For example, the RIM-RS symbol indication information may consist of one octet, that is, 8 bits. For example, in case that a value of bits of the octet indicates 1, the RIM-RS symbol indication information may indicate the first RIM-RS symbol. For example, in case that a value of the bits of the octet indicates 2, the RIM-RS symbol indication information may indicate the second RIM-RS symbol. For example, in case that a value of the bits of the octet indicates 3, the RIM-RS symbol indication information may indicate the first RIM-RS symbol and the second RIM-RS symbol. Although the 8-bit octet is exemplified in FIG. 11, the embodiments of the present disclosure are not limited thereto. In another embodiment, fewer bits than 8 bits may be used to indicate the RIM-RS symbol.

Unlike section extension information 1120, section extension information 1130, and section extension information 1140 described below, the section extension information 1110 may include only RIM-RS symbol indication information. The DU 210 may transmit only the RIM-RS symbol indication information to the RU 220 without phase difference compensation information within the section extension information. According to an embodiment, the RU 220 may perform a phase difference compensation based on a fixed IQ value. According to another embodiment, the RU 220 may perform phase difference compensation based on an IQ value transmitted through a C-plane message or an M-plane message before the section extension information 1110. According to still another embodiment, the RU 220 may perform phase difference compensation based on an IQ value calculated based on parameters (e.g., center frequency, phase difference information) transmitted through a C-plane message or an M-plane message before the section extension information 1110.

According to embodiments, the section extension information 1120 may include RIM-RS symbol indication information, phase difference compensation information for the first RIM-RS symbol (hereinafter, first phase difference compensation information), and phase difference compensation information for the second RIM-RS symbol (hereinafter, second phase difference compensation information). For example, the section extension information 1120 may consist of 12 octets. The section extension information 1120 may include 'extType' providing an extension type. The section extension information 1120 may include 'ef' indicating whether there is another extension present or whether a current extension field is the last extension. The section extension information 1120 may include 'extLen' providing a length of section extension in units of 32-bit (or 4-byte) words.

The RIM-RS symbol indication information 'rimrsSymbolInd' of the section extension information 1120 may indicate a RIM-RS symbol related to a corresponding section and the section extension information 1120. For the section extension information 1120, the description of the RIM-RS symbol indication information of the section extension information 1110 may be applied in the same manner.

The first phase difference compensation information 'phaseDecompIq_0' of the section extension information 1120 may indicate phase difference compensation information for the first RIM-RS symbol. The first phase difference compensation information may include IQ values for compensating a phase of the first RIM-RS symbol. A compensation target may be a difference between a carrier frequency (e.g., reference point $f_0^{RIM}$) of the first RIM-RS symbol and a carrier frequency $f_0$ of the general NR channel. The second phase difference compensation information 'phaseDecompIq_1' of the section extension information 1120 may indicate phase difference compensation information for the second RIM-RS symbol. The second phase difference compensation information may include IQ values for compensating a phase of the second RIM-RS symbol. A compensation target may be a difference between a carrier frequency (e.g., reference point $f_0^{RIM}$) of the second RIM-RS symbol and a carrier frequency $f_0$ of the general NR channel.

According to embodiments, the section extension information 1130 may include RIM-RS symbol indication information and phase difference compensation information. For example, the section extension information 1130 may consist of 8 octets. The section extension information 1130 may include 'extType' providing an extension type. The section extension information 1130 may include 'ef' indicating whether there is another extension present or whether a current extension field is the last extension. The section extension information 1130 may include 'extLen' providing a length of section extension in units of 32-bit (or 4-byte) words.

The RIM-RS symbol indication information 'rimrsSymbolInd' of the section extension information 1130 may indicate a RIM-RS symbol related to a corresponding section and the section extension information 1130. For the section extension information 1130, the description of the RIM-RS symbol indication information of the section extension information 1110 may be applied in the same manner.

The phase difference compensation information 'phaseDecompIq' of the section extension information 1130 may include IQ values for compensating a phase of the RIM-RS symbol. Herein, the RIM-RS symbol may be indicated by the RIM-RS symbol indication information. That is, the phase difference compensation information of the section extension information 1130 may include an IQ value for compensating a phase of the RIM-RS symbol indicated by the RIM-RS symbol indication information. For example, in case that the RIM-RS symbol indication information indicates a first RIM-RS symbol, an IQ value of the phase difference information may be used to compensate for the first RIM-RS symbol. In addition, for example, in case that the RIM-RS symbol indication information indicates a second RIM-RS symbol, the IQ value of the phase difference information may be used to compensate for the second RIM-RS symbol. In addition, for example, in case that the RIM-RS symbol indication information indicates both the first RIM-RS symbol and the second RIM-RS symbol, the IQ value of the phase difference information may be used to compensate for both the first RIM-RS symbol and the second RIM-RS symbol. For example, the phase difference compensation information may consist of four octets, that is, 32 bits. As an example, the 32 bits may indicate an IQ value for compensating a phase of the RIM-RS symbol.

According to embodiments, the section extension information 1140 may include RIM-RS symbol indication information and phase difference information. For example, the section extension information 1140 may consist of 8 octets. The section extension information 1140 may include 'extType' providing an extension type. The section extension information 1140 may include 'ef' indicating whether there is another extension present or whether a current extension field is the last extension. The section extension information 1120 may include 'extLen' providing a length of section extension in units of 32-bit (or 4-byte) words.

The RIM-RS symbol indication information 'rimrsSymbolInd' of the section extension information 1140 may indicate a RIM-RS symbol related to a corresponding section and the section extension information 1140. For the section extension information 1140, the description of the RIM-RS symbol indication information of the section extension information 1110 may be applied in the same manner.

The phase difference information 'phaseDifference' of the section extension information 1140 indicates a difference between a frequency of the RIM-RS and a carrier frequency of the system bandwidth. In a frequency domain, a difference between frequencies may correspond to a phase difference. The RU 220 may calculate an IQ value for compensation based on the phase difference information. For example, the phase difference information may consist of four octets, that is, 32 bits. As an example, the 32 bits may indicate a difference between a center frequency of the RIM-RS and a center frequency of the system bandwidth in a specified unit (e.g., 100 kilohertz (kHz), 10 kHz).

The RU 220 may perform compensation for RIM-RS symbol, based on the calculated IQ value. For example, in case that RIM-RS symbol indication information indicates the first RIM-RS symbol, the calculated IQ value may be used to compensate for the first RIM-RS symbol. In addition, for example, in case that the RIM-RS symbol indication information indicates a second RIM-RS symbol, the calculated IQ value may be used to compensate for the first RIM-RS symbol.

Although phase difference information 'phaseDifference' of the section extension information 1140 is described, a method of transmitting a parameter for determining the phase difference to the RU 220 may be operated, instead of directly transmitting the phase difference information to the RU 220. According to an embodiment, the section extension information 1140 may include frequency information (e.g., 'rimCenterFreq') indicating the center frequency of the RIM-RS instead of the phase difference information. For example, the frequency information may indicate the center frequency of the RIM-RS in 4-octets, that is, 32-bits. The frequency information may indicate an absolute radio frequency channel number (ARFCN) of the center frequency of the RIM-RS.

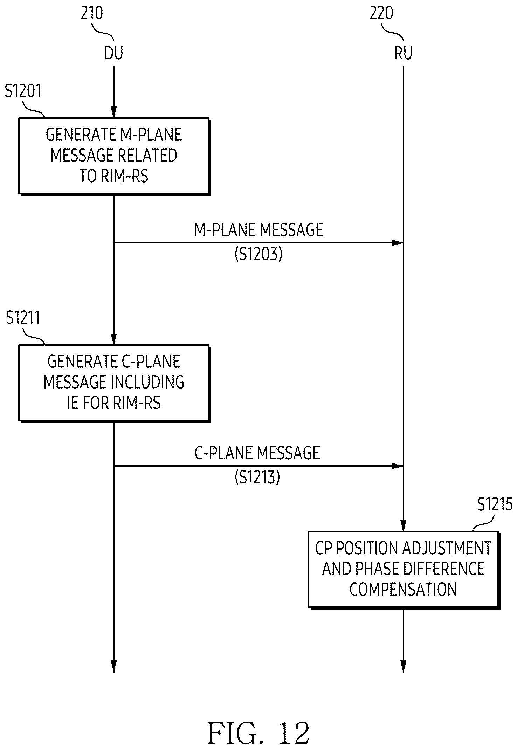

FIG. 12 illustrates an example of signaling between a DU and an RU for MC-based RIM-RS transmission through a C-plane message according to embodiments. Unlike FIG. 10, FIG. 12 describes a method for controlling RIM-RS processing of a RU, based on IE in a C-plane message or a field in the C-plane message, not section extension information. The DU exemplifies the DU 210 of FIG. 2A. In an embodiment, the RU 220 may include O-DU 251. The RU exemplifies the RU 220 of FIG. 2A. In an embodiment, the RU 220 may include O-RU 253-1.

Referring to FIG. 12, in operation S1201, the DU 210 may generate an M-plane message related to RIM-RS. According to an embodiment, the M-plane message may include a parameter for indicating whether to support information including IE for RIM-RS in a C-plane message described below. In an embodiment, the M-plane message may indicate which network entity performs a calculation of a phase difference between the RIM-RS transmission and the general NR channel when compensating for the phase difference of the RU 220. In an embodiment, the M-plane message may include information on an IQ value for phase difference compensation. According to an embodiment, the M-plane message may include information on a difference between the RIM-RS center frequency and the center frequency of the system bandwidth, which is a compensation target. According to an embodiment, the M-plane message may include information on the RIM-RS center frequency. According to an embodiment, the M-plane message may include information on the center frequency of the system bandwidth. All of parameters in the M-plane message described above may be transmitted through the M-plane, or at least a portion of the parameters may be transmitted. A detailed description of each parameter may refer to FIG. 10.

In operation S1203, the DU 210 may transmit the M-plane message to the RU 220. The RU 220 may receive the M-plane message from the DU 210. The RU 220 may receive the M-plane message from the DU 210. FIG. 12 illustrates transmission of the M-plane message for RIM-RS processing (e.g., CP position adjustment and RIM-RS phase difference compensation) of the RU 220, but embodiments of the present disclosure are not limited thereto. In alternative embodiments, operation S1201 and operation S1203 may be omitted.

In operation S1211, the DU 210 may generate a C-plane message including IE for the RIM-RS. The IE for the RIM-RS may include at least one of information for a RIM-RS symbol or information for a phase difference compensation. According to an embodiment, the 'reserved' field of the existing C-plane message may be replaced with at least one of information on the RIM-RS symbol or information on the phase difference compensation. In addition, according to an embodiment, the IE of the existing C-plane message may be replaced with at least one of information on the RIM-RS symbol or information on the phase difference compensation. In addition, according to an embodiment, at least one of information on the RIM-RS symbol or information on the phase difference compensation may be added to the C-plane message. The information on the RIM-RS symbol may refer to the description of information on the RIM-RS symbol in FIG. 10. The information on the phase difference compensation may refer to the description of information on the phase difference compensation in FIG. 10.

In operation S1213, the DU 210 may transmit the C-plane message. The RU 220 may receive the C-plane message from the DU 210.

In operation S1215, the RU 220 may perform a position adjustment of a CP and a phase difference compensation. The RU 220 may perform the position adjustment of the CP. In the time domain, the RU 220 may perform the position adjustment of the CP through a cyclic shift of RIM-RS symbol. In the frequency domain, the RU 220 may perform the position adjustment of the CP through a phase rotation of RIM-RS symbol. The RU 220 may perform a phase difference compensation. The RU 220 may perform a phase difference compensation for RIM-RS symbol. The RU 220 may perform a phase difference compensation for each of two symbols for RIM-RS transmission. The RU 220 may perform a phase difference compensation for each RIM-RS symbol.

In FIG. 12, only the M-plane message and the C-plane message are illustrated, but the RU 220 may receive the U-plane message from the DU 210, before performing the position adjustment of the CP and the phase difference compensation operation for the RIM-RS. The RU 220 may receive the IQ compression information of the RIM-RS modulated by the MC compression technique through the U-plane message from the DU 210. The RU 220 may perform decompression on the IQ compression information, based on the C-plane message. For example, the RU 220 may perform decompression based on the parameters of Tables 3 to 5 described above. The RU 220 may identify the IQ data for the RIM-RS.

In FIG. 12, an embodiment of receiving the C-plane message including the IE for the RIM-RS after receiving the M-plane message related to the RIM-RS is described, but the embodiments of the present disclosure are not limited thereto. If all parameters for the position adjustment of the CP and the phase difference compensation of the RIM-RS are transmitted through the C-plane message, the M-plane message may be omitted. According to an embodiment, operation S1201 and operation S1203 may be omitted.

Although not illustrated in FIG. 12, according to an embodiment, the RU 220 may transmit, to the DU (210), capability information on whether to support information including an IE for RIM-RS in a new C-plane message (i.e., MC-based RIM-RS transmission, or CP position adjustment and phase difference compensation for RIM-RS in the RU). In addition, according to an embodiment, the RU 220 may transmit, to the DU 210, capability information indicating that a calculation of a phase difference between the RIM-RS transmission and the general NR channel is possible. As well as the above-described embodiments, in addition to the above-described M-plane message, signaling for negotiating and transmitting required M-plane parameters may be performed on a fronthaul interface between the DU and the RU.

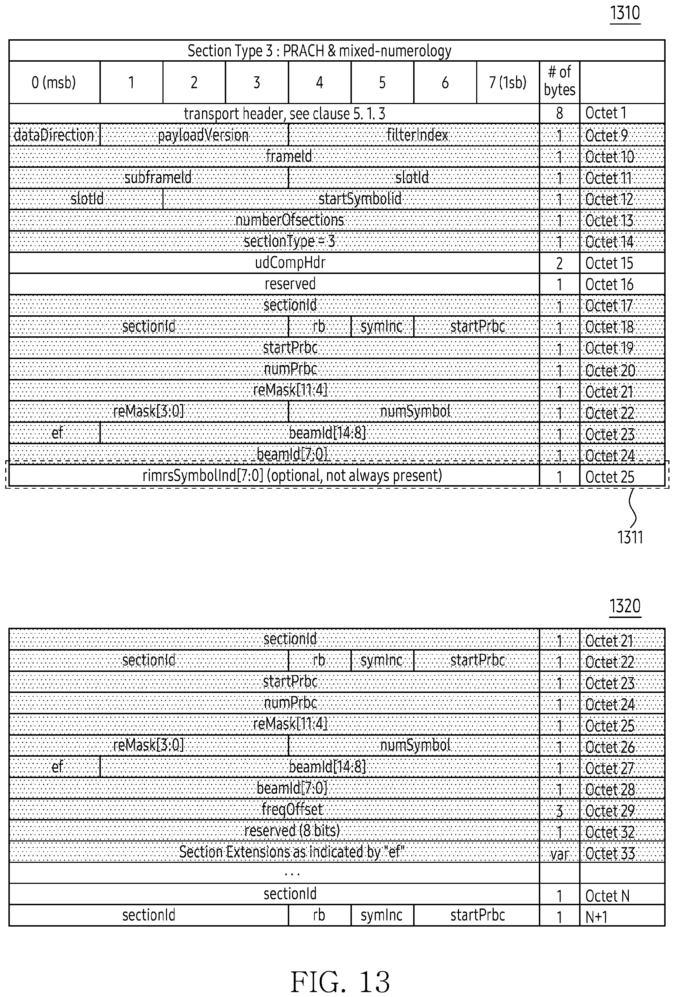

FIG. 13 illustrates an example of a C-plane message for MC-based RIM-RS transmission according to embodiments. For RIM-RS processing in the RU, an information element (IE) or a 'reserved' field of the C-plane may be used. The DU may transmit a C-plane message including the IE for MC-based RIM-RS transmission to the RU. The C-plane message exemplified in FIG. 13 may be a C-plane message generated in operation S1211 of FIG. 12.

The information for MC-based RIM-RS transmission according to embodiments may be used with a section of a specified type of a C-plane message. According to an embodiment, a section type of the C-plane message may be '1'. According to an embodiment, a section type of the C-plane message may be '3'. According to an embodiment, a section type of the C-plane message may be '5'.

Referring to FIG. 13, a C-plane message 1310 may include multiple fields. The section type of the C-plane message 1310 may be '1'. A C-plane message 1320 may include multiple fields. The section type of the C-plane message 1320 may be '3'. Section type 1 or section type 3 is exemplified in FIG. 13, but as described above, the description of embodiments to be described later may be equally applied to other section types (e.g., section type 5).

The C-plane message 1310 of the section type 1 or the C-plane message 1320 of the section type 3 may include a 'reserved' field according to the current standard. According to some embodiments, instead of the 'reserved' field of the C-plane message 1310 or the C-plane message 1320, an IE for the RIM-RS may be placed. Instead of the 'reserved' field of the C-plane message 1310 or the C-plane message 1320, the RIM-RS symbol indication information may be included. The RIM-RS symbol indication information 'rimrsSymbolInd' may indicate a RIM-RS symbol related to a section of the corresponding C-plane message. Two symbols may be required for RIM-RS transmission. The RIM-RS symbol indication information may indicate at least one of the two symbols. For example, the RIM-RS symbol indication information may indicate a first RIM-RS symbol (hereinafter, the first RIM-RS symbol) among the two symbols. For another example, the RIM-RS symbol indication information may indicate a second RIM-RS (hereinafter, the second RIM-RS symbol) among the two symbols. For the RIM-RS symbol identification information, a description of FIG. 11 may be referred to.

According to some embodiments, the DU 210 may indicate the RIM-RS symbol indication information based on existing IE, not 'reserved' field of the C-plane message. Bits compressed by modulation compression technique may be transmitted to a fronthaul interface. Herein, compression and allocation may be performed in units of symbols by modulation compression technique. Therefore, the IE used to indicate the RIM-RS symbol is required to have a relatively low degree of influence on the existing symbol. An IE having a low possibility of collision with the RIM-RS and another general NR channel (e.g., PDCCH, PDSCH, PUCCH, PUSCH) may be used to indicate the RIM-RS symbol according to embodiments. According to an embodiment, the RIM-RS symbol indication information may be indicated based on the 'filterIndex' IE located in a header of the C-plane message. The 'filterIndex' IE information in the current standard is as follows.

[Table 6]

| Value of IE "filter Index" | Usage | PRACH preamble formats | Minimum filter pass band |
|---|---|---|---|
| 0000b=0x0 | standard channel filter | N/A | |
| 0001b=0x1 | UL filter for PRACH preamble formats | LTE-0, LTE-1, LTE-2, LTE-3, NR-0, NR-1, NR-2 | 839 x 1.25kHz = 1048.75 kHz |
| 0010b=0x2 | | NR-3 | 839 x 5 kHz = 4195 kHz |
| 0011b=0x3 | | NR-A1, NR-A2, NR-A3, NR-B1, NR-B2, NR-B3, NR-B4, NR-C0, NR-C2 | 139 x $\Delta f^{R\Delta}$ (See SCS in Table 5-11) |
| 0110b=0x6 | | | 1151 x 15 kHz = 17265 kHz |
| 0111b=0x7 | | | 571 x 30 kHz = 17130 kHz |
| 0100b=0x4 | UL filter for NPRACH | LTE-NB0, LTE-NB1 LTE-NB0-a, LTE-NB1-a LTE-NB2 | 48 x 3.75kHz = 180 kHz 144 x 1.25 kHz = 180 kHz |
| 0101b=0x5 | UL filter for PRACH preamble formats | LTE-4 | 139 x 7.5kHz = 1042.5 kHz |
| 1000b...1111b | Reserved | | |

Some of values indicating 'reserved' in Table 6 may be used to indicate a RIM-RS symbol according to embodiments. For example, some of the values of the 'filterIndex' IE may indicate a RIM-RS symbol, by referring to Table 7 below.

[Table 7]

| Value of IE "filterIndex" | Usage |
|---|---|
| 1000b | Reserved |
| 1001b | DL RIM RS symbol (1st symbol) |
| 1010b | DL RIM RS symbol (2nd symbol) |
| 1011b | DL RIM RS symbols (1st and 2nd symbols) |
| 1100b ... 1111b | Reserved |

According to some embodiments, the DU 210 may add newly defined octets to the C-plane message. Additional byte(s) including parameter(s) described in FIG. 11 may be added to the C-plane message.

According to an embodiment, the C-plane message 1310 may include an octet, that is 8-bit field, including RIM-RS symbol indication information 'rimrsSymbolInd', which is a new parameter. The RIM-RS symbol indication information may indicate a specific RIM-RS symbol among two symbols of the RIM-RS transmission corresponding to a section of the C-plane message 1310. Only the RIM-RS symbol indication information 'rimrsSymbolInd' is illustrated in FIG. 13, but other parameters may also be added. For example, a field including phase difference compensation information 'phaseDecompIq' (or at least one of first phase difference compensation information 'phaseDecompIq_0' or second phase difference compensation information ('phaseDecompIq_1') may be added to the C-plane message. In addition, for example, a field including phase difference information 'phaseDifference' may be added to the C-plane message. In addition, for example, a field including frequency information 'rimCenterFreq' indicating a center frequency of the RIM-RS may be added to the C-plane message. A specific description for each parameter is as follows.

- RIM-RS symbol indication information 'rimrsSymbolInd' may indicate a RIM-RS symbol related to a corresponding section of the C-plane message. Two symbols may be required for a RIM-RS transmission. For example, the RIM-RS symbol indication information may consist of one octet, that is, 8 bits. The 8 bits may indicate at least one of the first RIM-RS symbol or the second RIM-RS symbol among the two symbols of the RIM-RS transmission.
- The phase difference compensation information 'phaseDecompIq' may include IQ values for compensating a phase of the RIM-RS symbol. Herein, the RIM-RS symbol may be indicated by the RIM-RS symbol indication information. For example, the phase difference compensation information may consist of 4 octets, that is, 32 bits. As an example, the 32 bits may indicate an IQ value for compensating for a phase of the RIM-RS symbol. According to another embodiment, instead of the phase difference compensation information 'phaseDecompIq', the first phase difference compensation information 'phaseDecompIq_0' and the second phase difference compensation information 'phaseDecompIq_1' may be used.
- The phase difference information 'phaseDifference' indicates a difference between a frequency of the RIM-RS and a carrier frequency of the system bandwidth. For example, the phase difference information may consist of 4 octets, that is, 32 bits. As an example, the 32 bits may indicate a difference between the center frequency of the RIM-RS and the center frequency of the system bandwidth in a specified unit (e.g., 100 kHz, 10 kHz).
- The frequency information (e.g. 'rimCenterFreq') may indicate the center frequency of the RIM-RS. For example, the frequency information may indicate a center frequency of the RIM-RS in 4-octets, that is, 32-bits. The frequency information may indicate an absolute radio frequency channel number (ARFCN) of the center frequency of the RIM-RS.

The above-described parameters may be optionally included in the C-plane message for compatibility. The optional parameters may be activated based on a parameter defined in the M-plane. In addition, unlike the RIM-RS symbol indication information, other parameters may be omitted in some sections. Although the C-plane message 1310 of section type 1 is illustrated in FIG. 13, at least a portion of the above-described parameters may be added to the C-plane message of section type 3 or section type 5.

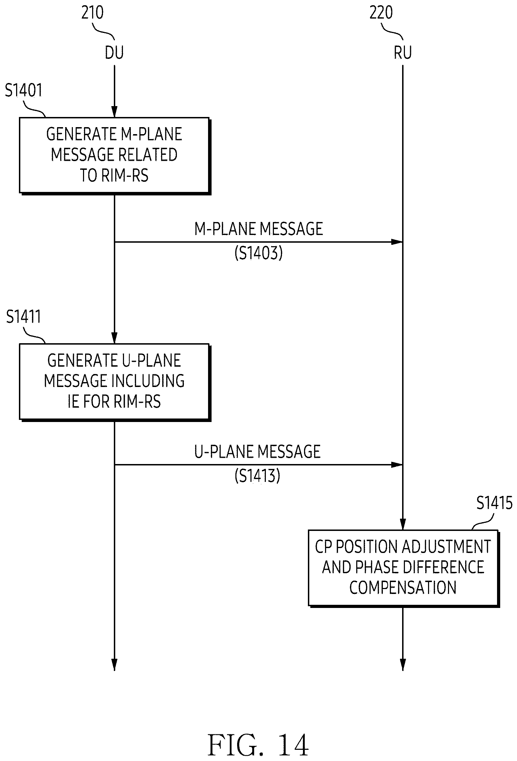

FIG. 14 illustrates an example of signaling between a DU and an RU for MC-based RIM-RS transmission through a U-plane message according to embodiments. Unlike FIG. 12, FIG. 14 describes a method for controlling RIM-RS processing of the RU, based on a field in the U-plane message, not a C-plane message. The DU exemplifies the DU 210 of FIG. 2A. According to an embodiment, the RU 220 may include O-DU 251. The RU exemplifies the RU 220 of FIG. 2A. According to an embodiment, the RU 220 may include O-RU 253-1.

Referring to FIG. 14, in operation S1401, the DU 210 may generate an M-plane message related to RIM-RS.

According to an embodiment, the M-plane message may include a parameter for indicating whether to support information including an IE for RIM-RS in a U-plane message described below. In an embodiment, the M-plane message may indicate which network entity performs a calculation of a phase difference between the RIM-RS transmission and the general NR channel when compensating for the phase difference of the RU 220. According to an embodiment, the M-plane message may include information on an IQ value for phase difference compensation. According to an embodiment, the M-plane message may include information on a difference between the RIM-RS center frequency and the center frequency of the system bandwidth, which is a compensation target. According to an embodiment, the M-plane message may include information on the RIM-RS center frequency. According to an embodiment, the M-plane message may include information on the center frequency of the system bandwidth. All of parameters in the above-described M-plane message may be transmitted through the M-plane, or at least a portion of the parameters may be transmitted. A detailed description of each parameter may refer to FIG. 10.

In operation S1403, the DU 210 may transmit an M-plane message to the RU 220. The RU 220 may receive an M-plane message from the DU 210. The RU 220 may receive an M-plane message from the DU 210. FIG. 14 illustrates transmission of an M-plane message for RIM-RS processing (e.g., CP position adjustment and RIM-RS phase difference compensation) of the RU 220, but embodiments of the present disclosure are not limited thereto. In alternative embodiments, operation S1401 and operation S1403 may be omitted.

In operation S1411, the DU 210 may generate a U-plane message including an IE for RIM-RS. The IE for RIM-RS may include at least one of information on a RIM-RS symbol or information on a phase difference compensation. According to an embodiment, the 'reserved' field of the existing U-plane message may be replaced with at least one of the information on the RIM-RS symbol or the information on the phase difference compensation. In addition, according to an embodiment, at least one of the information on the RIM-RS symbol or the information on the phase difference compensation may be added to the U-plane message. The information on the RIM-RS symbol may refer to the description of information on the RIM-RS symbol in FIG. 10. The information on the phase difference compensation may refer to the description of information on the phase difference compensation in FIG. 10.

In operation S1413, the DU 210 may transmit the U-plane message. The RU 220 may receive the U-plane message from the DU 210.

In operation S 1415, the RU 220 may perform a position adjustment of a CP and a phase difference compensation. The RU 220 may perform the position adjustment of the CP. In the time domain, the RU 220 may perform the position adjustment of the CP through a cyclic shift of the RIM-RS symbol. In the frequency domain, the RU 220 may perform the position adjustment of the CP through a phase rotation of the RIM-RS symbol. The RU 220 may perform the phase difference compensation. The RU 220 may perform the phase difference compensation for the RIM-RS symbol. The RU 220 may perform a phase difference compensation for each of two symbols for RIM-RS transmission. The RU 220 may perform the phase difference compensation for each RIM-RS symbol.

In FIG. 14, an embodiment of receiving a U-plane message including an IE for a RIM-RS after receiving an M-plane message related to the RIM-RS is described, but the embodiments of the present disclosure are not limited thereto. If all of parameters for the position adjustment of the CP and the phase difference compensation of the RIM-RS are transmitted through the U-plane message, the M-plane message may be omitted. According to an embodiment, operations S1401 and S1403 may be omitted.

In FIG. 14, operations for performing the position adjustment of the CP and the phase difference compensation of the RIM-RS are described based on the M-plane message related to the RIM-RS and the U-plane message including the IE for the RIM-RS. However, the embodiments of the present disclosure are not limited thereto. Based on the M-plane message, the U-plane message, and the C-plane message, the RU 220 may perform RIM-RS processing. According to an embodiment, at least a portion of the above-described parameters may be provided through the M-plane message, at least another portion of the above-described parameters may be provided through the IE within the C-plane message, and a remaining portion may be provided through the IE within the U-plane message. As an example, information indicating that MC-based RIM-RS transmission is supported and information on the center frequency of the system bandwidth may be provided to the RU 220 by the M-plane message. The RIM-RS symbol indication information may be provided to the RU 220 by the C-plane message. Information on the carrier frequency of the RIM-RS transmission may be provided to the RU 220 by a U-plane message. As another example, information indicating that MC-based RIM-RS transmission is supported may be provided to the RU 220 by the M-plane message. The RIM-RS symbol indication information may be provided to the RU 220 by the C-plane message. Phase difference compensation values for each RIM-RS symbol may be provided to the RU 220 by the U-plane message.

Although not illustrated in FIG. 14, according to an embodiment, the RU 220 may transmit, to the DU 210, capability information on whether to support information (i.e. MC-based RIM-RS transmission, or CP position adjustment and phase difference compensation for RIM-RS in the RU) including IE for RIM-RS in a new U-plane message. In addition, according to an embodiment, the RU 220 may transmit capability information to the DU 210 indicating that a calculation of a phase difference between RIM-RS transmission and a general NR channel is possible. As well as the embodiments described above, in addition to the M-plane messages described above, signaling for negotiating and transmitting required M-plane parameters may be performed on a fronthaul interface between the DU and the RU.

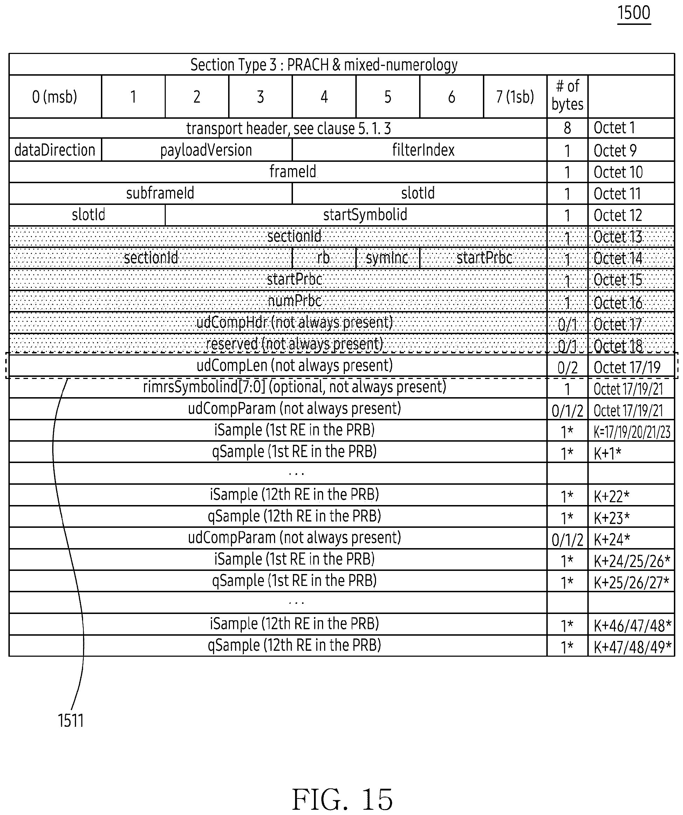

FIG. 15 illustrates an example of a U-plane message for MC-based RIM-RS transmission according to embodiments. For RIM-RS processing in the RU, an IE or 'reserved' field of the U-plane may be used. The DU may transmit a U-plane message including the IE for MC-based RIM-RS transmission to the RU. The U-plane message exemplified in FIG. 15 may be a U-plane message generated in the operation S1411 of FIG. 14.

Information for MC-based RIM-RS transmission according to embodiments may be used with a section of a designated type of a C-plane message. Herein, the C-plane message may be coupled with the U-plane of FIG. 15. In case that coupling of C-Plane with U-Plane via 'sectionId' is used, the C-Plane message 'sectionId' identifies an individual data section described by a data section description in the C-Plane message. Through the 'sectionId', it may be mapped to the corresponding C-plane message (and section type) related to the U-plane data section. According to an embodiment, a section type of the C-plane message may be '1'. According to an embodiment, the section type of the C-plane message may be '3'. According to an embodiment, the section type of the C-plane message may be '5'.

Referring to FIG. 15, the U-plane message 1510 may include multiple fields. The section type of the U-plane message 1510 may be '1'. In FIG. 15, the U-plane message related to the section type 1 is exemplified, but the description of the embodiments described below may be equally applied to another section type (e.g., section type 3, section type 5).

The DU 210 may add newly defined octets to the U-plane message. Additional byte(s) including parameter(s) described in FIG. 11 may be added to the U-plane message.

According to an embodiment, the U-plane message 1500 may include an octet, that is, 8-bit field, including RIM-RS symbol indication information 'rimrsSymbolInd' 1511, which is a new parameter. The RIM-RS symbol indication information 1511 may indicate a specific RIM-RS symbol among two symbols of RIM-RS transmission corresponding to a section of the U-plane message 1500. Only the RIM-RS symbol indication information 1511 is illustrated in FIG. 15, but other parameters may also be added. For example, a field including phase difference compensation information 'phaseDecompIq' (or at least one of first phase difference compensation information 'phaseDecompIq_0' or second phase difference compensation information 'phaseDecompIq_1') may be added to the U-plane message. In addition, for example, a field including phase difference information 'phaseDifference' may be added to the U-plane message. In addition, for example, a field including frequency information 'rimCenterFreq' indicating a center frequency of the RIM-RS may be added to the U-plane message. The specific description of each parameter is as follows.

- RIM-RS symbol indication information 'rimrsSymbolInd' may indicate the RIM-RS symbol related to the corresponding section of the U-plane message. Two symbols may be required for the RIM-RS transmission. For example, the RIM-RS symbol indication information may consist of one octet, that is, 8 bits. The 8 bits may indicate at least one of the first RIM-RS symbol or the second RIM-RS symbol among the two symbols of the RIM-RS transmission.

- The phase difference compensation information 'phaseDecompIq' may include IQ values for compensating a phase of the RIM-RS symbol. Herein, the RIM-RS symbol may be indicated by the RIM-RS symbol indication information. For example, the phase difference compensation information may consist of 4 octets, that is, 32 bits. As an example, the 32 bits may indicate an IQ value for compensating a phase of the RIM-RS symbol. According to another embodiment, instead of the phase difference compensation information 'phaseDecompIq', the first phase difference compensation information 'phaseDecompIq_0' and the second phase difference compensation information 'phaseDecompIq_1' may be used.

- The phase difference information 'phaseDifference' indicates a difference between a frequency of the RIM-RS and a carrier frequency of the system bandwidth. For example, the phase difference information may consist of 4 octets, that is, 32 bits. As an example, 32 bits may indicate a difference between the center frequency of the RIM-RS and the center frequency of the system bandwidth in a specified unit (e.g., 100 kHz, 10 kHz).

- Frequency information (e.g. 'rimCenterFreq') may indicate a center frequency of the RIM-RS. For example, the frequency information may indicate a center frequency of the RIM-RS in 4-octets, that is, 32-bits. The frequency information may indicate an absolute radio frequency channel number (ARFCN) of the center frequency of the RIM-RS.

The above-described parameters may be optionally included in the U-plane message for compatibility. The optional parameters may be activated based on the parameter defined in the M-plane. In addition, unlike the RIM-RS symbol indication information, other parameters may be omitted in some sections. Although the U-plane message 1500 corresponding to section type 1 is illustrated in FIG. 15, at least a portion of the above-described parameters may be added to the U-plane message combined with section type 3 or section type 5.

The parameters according to the embodiments of the present disclosure may be used for the RIM-RS symbol modulated by the MC compression technique. Therefore, it may be required that a compression technique indicated in the U-plane message is related to MC. According to an embodiment, in case that a static compression technique defined in the M-plane is 'Modulation compression' or 'Mod-compr + selective RE sending', the U-plane message may include at least one of RIM-RS indication information or phase difference information. In addition, according to an embodiment, in case that a compression method (e.g., 4-bit 'udCompMeth') in the U-plane message including the RIM-RS indication information or the phase difference information is 'Modulation compression' ('0100b' in Table 1) or 'Mod-compr + selective RE sending' ('0110b' in Table 1), the U-plane message may include at least one of the RIM-RS indication information or the phase difference information.

Through the parameters and related operations illustrated in FIGS. 10 to 15, the RU 220 may obtain parameters required for RIM-RS related processing from the DU 210.

RIM-RS may be compressed using a modulation compression technique. After constellation mapping, IQ bits corresponding to the compressed symbol may be provided from the DU 210 to the RU 220 through a U-plane message. Due to the modulation compression technique, a position adjustment of a CP for RIM-RS transmission and a phase difference compensation between a carrier frequency for RIM-RS transmission and a carrier frequency of a bandwidth may be required in the RU 220. Accordingly, the DU 210 according to embodiments of the present disclosure may provide at least one parameter for RIM-RS processing to the RU 220, based on section extension information in the C-plane message, IE in the C-plane message, or IE in the U-plane message, or a combination thereof. The RU 220 may perform a cyclic shift (or phase rotation in frequency domain) for RIM-RS CP and a phase difference compensation, based on the at least one parameter. In addition, in another embodiments, overhead of the C-plane message or the U-plane message may be reduced by setting at least a portion of the above-described parameters by the M-plane message.

According to embodiments, a method performed by a radio unit (RU) may comprise receiving, from a distributed unit (DU) via a fronthaul interface, a control plane (C-plane) message including section extension information. The method may comprise receiving, from the DU via the fronthaul interface, a user plane (U-plane) message including remote interference management-reference signal (RIM-RS) symbols. The method may comprise performing a phase difference compensation for the RIM-RS symbols and a position adjustment of a cyclic prefix (CP) for the RIM-RS symbols. The section extension information may include at least one of indication information for indicating at least one of the RIM-RS symbols, or compensation information related to the phase difference compensation.

According to an embodiment, the indication information may indicate at least one of a first RIM-RS symbol or a second RIM-RS symbol of the RIM-RS symbols. The indication information may be used for the position adjustment of the CP.

According to an embodiment, the compensation information may include at least one of an in-phase/quadrature (IQ) value for compensating a phase difference related to a difference between a carrier frequency for a first RIM-RS symbol of the RIM-RS symbols and a carrier frequency of a system bandwidth, or an IQ value for compensating a phase difference related to a difference between a carrier frequency for a second RIM-RS symbol of the RIM-RS symbols and the carrier frequency of the system bandwidth.

According to an embodiment, the compensation information may include carrier frequency information for RIM-RS transmission, or information on a difference between the carrier frequency for the RIM-RS transmission and a carrier frequency of a system bandwidth.

According to an embodiment, the RIM-RS symbols may be a quadrature phase shift keying (QPSK)-modulated symbols based on modulation compression (MC).

According to an embodiment, the method may comprise transmitting, to the DU via the fronthaul interface, an M-plane message including capability information, before receiving the C-plane message from the DU. The capability information may be used to indicate whether the RU supports at least one of the indication information or the compensation information.

According to an embodiment, the method may comprise receiving an M-plane message from the DU via the fronthaul interface before receiving the C-plane message from the DU. The M-plane message may include at least one of information indicating whether a position adjustment of a CP and a phase difference compensation of the RU are supported, information on an in-phase/quadrature (IQ) value for compensating a phase difference, information on a RIM-RS center frequency, information on a center frequency of a system bandwidth, or information on a difference between the RIM-RS center frequency and the center frequency of the system bandwidth.

According to embodiments, a method performed by a distributed unit (DU) may comprise transmitting, to a radio unit (RU) via a fronthaul interface, a control plane (C-plane) message including section extension information. The method may comprise transmitting, to the RU via the fronthaul interface, a user plane (U-plane) message including RIM-RS symbols. The section extension information may be used to perform a phase difference compensation for the RIM-RS symbols and a position adjustment of a cyclic prefix (CP) for the RIM-RS symbols. The section extension information may include at least one of indication information for indicating at least one of the RIM-RS symbols or compensation information related to the phase difference compensation.

According to an embodiment, the indication information may indicate at least one of a first RIM-RS symbol or a second RIM-RS symbol of the RIM-RS symbols.

According to an embodiment, the compensation information may include at least one of an in-phase/quadrature (IQ) value for compensating a phase difference related to a difference between a carrier frequency for a first RIM-RS symbol of the RIM-RS symbols and a carrier frequency of a system bandwidth, or an IQ value for compensating a phase difference related to a difference between a carrier frequency for a second RIM-RS symbol of the RIM-RS symbols and the carrier frequency of the system bandwidth.

According to an embodiment, the compensation information may include carrier frequency information for RIM-RS transmission, or information on a difference between the carrier frequency for the RIM-RS transmission and a carrier frequency of a system bandwidth.

According to an embodiment, the RIM-RS symbols may be a quadrature phase shift keying (QPSK)-modulated symbols based on modulation compression (MC).

According to an embodiment, the method may comprise receiving, from the RU via the fronthaul interface, an M-plane message including capability information, before transmitting the C-plane message to the RU. The capability information may be used to indicate whether the RU supports at least one of the indication information or the compensation information.

According to an embodiment, the method may include transmitting an M-plane message to the RU via the fronthaul interface, before transmitting the C-plane message to the RU. The M-plane message may include at least one of information indicating whether a position adjustment of a CP and a phase difference compensation of the RU are supported, information on an in-phase/quadrature (IQ) value for compensating a phase difference, information on a RIM-RS center frequency, information on a center frequency of a system bandwidth, or information on a difference between the RIM-RS center frequency and the center frequency of the system bandwidth.

According to embodiments, an electronic device performed by a radio unit (RU) may comprise a fronthaul transceiver, at least one radio frequency (RF) transceiver, and at least one processor coupled to the fronthaul transceiver and the at least one RF transceiver. The at least one processor may be configured to receive, from a distributed unit (DU) via a fronthaul interface, a control plane (C-plane) message including section extension information. The at least one processor may be configured to receive, from the DU via the fronthaul interface, a user plane (U-plane) message including remote interference management-reference signal (RIM-RS) symbols. The at least one processor may be configured to perform a phase difference compensation for the RIM-RS symbols and a position adjustment of a cyclic prefix (CP) for the RIM-RS symbols. The section extension information may include at least one of indication information for indicating at least one of the RIM-RS symbols, or compensation information related to the phase difference compensation.

According to an embodiment, the indication information may indicate at least one of a first RIM-RS symbol or a second RIM-RS symbol of the RIM-RS symbols, and wherein the indication information may be used for the position adjustment of the CP.

According to an embodiment, the compensation information may include at least one of an in-phase/quadrature (IQ) value for compensating a phase difference related to a difference between a carrier frequency for a first RIM-RS symbol of the RIM-RS symbols and a carrier frequency of a system bandwidth, or an IQ value for compensating a phase difference related to a difference between a carrier frequency for a second RIM-RS symbol of the RIM-RS symbols and the carrier frequency of the system bandwidth.

According to an embodiment, the compensation information may include carrier frequency information for RIM-RS transmission, or information on a difference between the carrier frequency for the RIM-RS transmission and a carrier frequency of a system bandwidth.

According to an embodiment, the RIM-RS symbols may be a quadrature phase shift keying (QPSK)-modulated symbols based on modulation compression (MC).

According to an embodiment, the at least one processor may be configured to transmit, to the DU via the fronthaul interface, an M-plane message including capability information, before receiving the C-plane message from the DU. The capability information may be used to indicate whether the RU supports at least one of the indication information or the compensation information.

According to an embodiment, the at least one processor may be configured to receive an M-plane message from the DU via the fronthaul interface, before receiving the C-plane message from the DU. The M-plane message may include at least one of information indicating whether a position adjustment of a CP and a phase difference compensation of the RU are supported, information on an in-phase/quadrature (IQ) value for compensating a phase difference, information on a RIM-RS center frequency, information on a center frequency of a system bandwidth, or information on a difference between the RIM-RS center frequency and the center frequency of the system bandwidth.

According to embodiments, an electronic device performed by a Distributed Unit (DU) may comprise at least one transceiver including a fronthaul transceiver, and at least one processor coupled to the at least one transceiver. The at least one processor may be configured to transmit, to a radio unit (RU) via a fronthaul interface, a control plane (C-plane) message including section extension information. The at least one processor may be configured to transmit, to the RU via the fronthaul interface, a user plane (U-plane) message including RIM-RS symbols. The section extension information may be used to perform a phase difference compensation for the RIM-RS symbols and a position adjustment of a cyclic prefix (CP) for the RIM-RS symbols. The section extension information may include at least one of indication information for indicating at least one of the RIM-RS symbols or compensation information related to the phase difference compensation.

According to an embodiment, the indication information may indicate at least one of a first RIM-RS symbol or a second RIM-RS symbol of the RIM-RS symbols.

According to an embodiment, the compensation information may include at least one of an in-phase/quadrature (IQ) value for compensating a phase difference related to a difference between a carrier frequency for a first RIM-RS symbol of the RIM-RS symbols and a carrier frequency of a system bandwidth, or an IQ value for compensating a phase difference related to a difference between a carrier frequency for a second RIM-RS symbol of the RIM-RS symbols and the carrier frequency of the system bandwidth.

According to an embodiment, the compensation information may include carrier frequency information for RIM-RS transmission, or information on a difference between the carrier frequency for the RIM-RS transmission and a carrier frequency of a system bandwidth.

According to an embodiment, the RIM-RS symbols may be a quadrature phase shift keying (QPSK)-modulated symbols based on modulation compression (MC).

According to an embodiment, the at least one processor may be configured to receive, from the RU via the fronthaul interface, an M-plane message including capability information, before transmitting the C-plane message to the RU. The capability information may be used to indicate whether the RU supports at least one of the indication information or the compensation information.

According to an embodiment, the at least one processor may be configured to transmit an M-plane message to the RU via the fronthaul interface, before transmitting the C-plane message to the RU. The M-plane message may include at least one of information indicating whether a position adjustment of a CP and a phase difference compensation of the RU are supported, information on an in-phase/quadrature (IQ) value for compensating a phase difference, information on a RIM-RS center frequency, information on a center frequency of a system bandwidth, or information on a difference between the RIM-RS center frequency and the center frequency of the system bandwidth.

According to embodiments, a non-transitory computer-readable medium is provided. The non-transitory computer-readable medium may comprise a memory storing a program including instructions. The instructions, when executed by a processor, cause a distributed unit (DU) to receive, from a distributed unit (DU) via a fronthaul interface, a control plane (C-plane) message including section extension information. The instructions, when executed by the processor, cause the DU to receive, from the DU via the fronthaul interface, a user plane (U-plane) message including remote interference management-reference signal (RIM-RS) symbols. The instructions, when executed by the processor, cause the DU to perform a phase difference compensation for the RIM-RS symbols and a position adjustment of a cyclic prefix (CP) for the RIM-RS symbols. The section extension information may include at least one of indication information for indicating at least one of the RIM-RS symbols, or compensation information related to the phase difference compensation.

According to embodiments, a non-transitory computer-readable medium is provided. The non-transitory computer-readable medium may comprise a memory storing a program including instructions. The instructions, when executed by a processor, cause a radio unit (RU) to transmit, to the RU via a fronthaul interface, a control plane (C-plane) message including section extension information. The instructions, when executed by the processor, cause the RU to transmit, to the RU via the fronthaul interface, a user plane (U-plane) message including RIM-RS symbols. The section extension information may be used to perform a phase difference compensation for the RIM-RS symbols and a position adjustment of a cyclic prefix (CP) for the RIM-RS symbols. The section extension information may include at least one of indication information for indicating at least one of the RIM-RS symbols or compensation information related to the phase difference compensation.

Various embodiments as set forth herein may be implemented as software including one or more instructions that are stored in a storage medium that is readable by a machine (e.g., a device performing the functions of the DU 210 or a device performing the functions of the RU 220). For example, a processor (e.g., the processor 330, the processor 380) of the machine (e.g., the DU 210, the RU 220) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium. O-RAN enables the configuration of a virtualized intelligent network with standardized open interfaces. For network virtualization, the operations according to embodiments may be implemented in a form of a recording medium (e.g., memory).

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, the program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

**Claims**

1.  A method performed by a radio unit (RU), comprising:

    receiving, from a distributed unit (DU) via a fronthaul interface, a control plane (C-plane) message including section extension information;
    receiving, from the DU via the fronthaul interface, a user plane (U-plane) message including remote interference management-reference signal (RIM-RS) symbols;
    performing a phase difference compensation for the RIM-RS symbols and a position adjustment of a cyclic prefix (CP) for the RIM-RS symbols, and
    wherein the section extension information includes at least one of indication information for indicating at least one of the RIM-RS symbols, or compensation information related to the phase difference compensation.

2.  The method of claim 1,

    wherein the indication information indicates at least one of a first RIM-RS symbol or a second RIM-RS symbol of the RIM-RS symbols, and
    wherein the indication information is used for the position adjustment of the CP.

3. The method of any one of claims 1 to 2,
   wherein the compensation information includes at least one of:

   an in-phase/quadrature (IQ) value for compensating a phase difference related to a difference between a carrier frequency for a first RIM-RS symbol of the RIM-RS symbols and a carrier frequency of a system bandwidth, or an IQ value for compensating a phase difference related to a difference between a carrier frequency for a second RIM-RS symbol of the RIM-RS symbols and the carrier frequency of the system bandwidth.

4. The method of any one of claims 1 to 3,
   wherein the compensation information includes carrier frequency information for RIM-RS transmission, or information on a difference between the carrier frequency for the RIM-RS transmission and a carrier frequency of a system bandwidth.

5. The method of any one of claims 1 to 4,
   wherein the RIM-RS symbols are a quadrature phase shift keying (QPSK)-modulated symbols based on modulation compression (MC).

6. The method of any one of claims 1 to 5, further comprising:

   before receiving the C-plane message from the DU, transmitting, to the DU via the fronthaul interface, an M-plane message including capability information,
   wherein the capability information is used to indicate whether the RU supports at least one of the indication information or the compensation information.

7. An electronic device performed by a radio unit (RU), comprising:

   a fronthaul transceiver;
   at least one radio frequency (RF) transceiver; and
   at least one processor coupled to the fronthaul transceiver and the at least one RF transceiver,
   wherein the at least one processor is configured to perform one of the methods of claims 1 to 6.

8. A method performed by a distributed unit (DU), comprising:

   transmitting, to a radio unit (RU) via a fronthaul interface, a control plane (C-plane) message including section extension information;
   transmitting, to the RU via the fronthaul interface, a user plane (U-plane) message including RIM-RS symbols;
   wherein the section extension information is used to perform a phase difference compensation for the RIM-RS symbols and a position adjustment of a cyclic prefix (CP) for the RIM-RS symbols, and
   wherein the section extension information includes at least one of indication information for indicating at least one of the RIM-RS symbols or compensation information related to the phase difference compensation.

9. The method of claim 8,
   wherein the indication information indicates at least one of a first RIM-RS symbol or a second RIM-RS symbol of the RIM-RS symbols.

10. The method of any one of claims 8 to 9,
    wherein the compensation information includes at least one of:

    an in-phase/quadrature (IQ) value for compensating a phase difference related to a difference between a carrier frequency for a first RIM-RS symbol of the RIM-RS symbols and a carrier frequency of a system bandwidth, or an IQ value for compensating a phase difference related to a difference between a carrier frequency for a second RIM-RS symbol of the RIM-RS symbols and the carrier frequency of the system bandwidth.

11. The method of any one of claims 8 to 10,
    wherein the compensation information includes carrier frequency information for RIM-RS transmission, or information on a difference between the carrier frequency for the RIM-RS transmission and a carrier frequency of a system bandwidth.

12. The method of any one of claims 8 to 11,
   wherein the RIM-RS symbols are a quadrature phase shift keying (QPSK)-modulated symbols based on modulation compression (MC).

13. The method of any one of claims 8 to 12, further comprising:

   before transmitting the C-plane message to the RU, receiving, from the RU via the fronthaul interface, an M-plane message including capability information,
   wherein the capability information is used to indicate whether the RU supports at least one of the indication information or the compensation information.

14. An electronic device performed by a Distributed Unit (DU), comprising:

   at least one transceiver including a fronthaul transceiver; and
   at least one processor coupled to the at least one transceiver,
   wherein the at least one processor is configured to perform one of the methods of claims 8 to 13.

15. A non-transitory computer-readable medium, comprising a memory storing a program including instructions,
   wherein the instructions, when executed by a processor, cause a distributed unit (DU) to perform one of the methods of claims 1 to 6, or cause a radio unit (RU) to perform one of the methods of claims 8 to 13.

FIG. 1

FIG. 2A

110

251

eNB/gNB

O-DU

LLS-C LLS-U

LLS-C LLS-U

O-RU · · · O-RU

253-1 253-n

FIG. 2B

210

DU

310

TRANSCEIVER

320

MEMORY

330

PROCESSOR

FIG. 3A

220

RU

360

RF
TRANSCEIVER

365

FRONTHAUL
TRANSCEIVER

370

MEMORY

380

PROCESSOR

FIG. 3B

FIG. 4

FIG. 5

150

1. Transmit RIM-RS type 1 (S601)

0. Remote
interference
detected

Aggressor

2. Report RIM-RS (S602)

3. Mitigotion scheme (S603)

4. Restore config (S604)

OAM

4. Stop RIM-RS (S605)

Victim

130

610

110

FIG. 6A

FIG. 6B

150

1. Transmit RIM-RS type 1 (S661)

0. Remote
interference
detected

Aggressor

Victim

130

110

2. Inform over Xn whether RIM-RS 1 is present/obsent (S662)

FIG. 6C

Regular OFDM structure — 711, 712, 721, 722 — CP, Copy

RIM-RS structure — 733, 731, 732 — Effective CP, CP, Copy, Copy

FIG. 7

FIG. 8A

810           821              822

| 4 | 5 | 0 | 1 | 2 | 3 | 4 | 5 | 0 | 1 | 2 | 3 | 4 | 5 |

| CP | Net OFDM symbol | CP | Net OFDM symbol |

830               840

FIG. 8B

801

RIM RS
Sequence
generation

803

Symbol
mapping

910

MC
compression

915a

915b

915a

920

MC
decompression

805

Adjust CP
location

807

Phase
difference
compensation

915b

FIG. 9

210
DU

220
RU

S1001

GENERATE M-PLANE
MESSAGE RELATED
TO RIM-RS

M-PLANE MESSAGE
(S1003)

S1011

GENERATE SECTION
EXTENSION INFORMATION
FOR RIM-RS

C-PLANE MESSAGE INCLUDING
SECTION EXTENSION INFORMATION
(S1013)

S1015

CP POSITION ADJUSTMENT
AND PHASE DIFFERENCE
COMPENSATION

FIG. 10

<u>1110</u>

| 0 (msb) | 1 | 2 | 3 | 4 | 5 | 6 | 7 (1sb) | # of bytes | |
|---|---|---|---|---|---|---|---|---|---|
| ef | extType = 0x11 | | | | | | | 1 | Octet M |
| extLen = 0x01 (1 word) | | | | | | | | 1 | M+1 |
| RIM RS symbol ind | | | | | | | | 1 | M+2 |
| reserved | | | | | | | | 1 | M+3 |

<u>1120</u>

| 0 (msb) | 1 | 2 | 3 | 4 | 5 | 6 | 7 (1sb) | # of bytes | |
|---|---|---|---|---|---|---|---|---|---|
| ef | extType = 0x11 | | | | | | | 1 | Octet M |
| extLen = 0x02 (1 word) | | | | | | | | 1 | M+1 |
| RIM RS symbol ind | | | | | | | | 1 | M+2 |
| phaseDecomplq 0 | | | | | | | | 4 | M+3 |
| phaseDecomplq 1 | | | | | | | | 4 | M+7 |
| Reserved | | | | | | | | 1 | M+11 |

<u>1130</u>

| 0 (msb) | 1 | 2 | 3 | 4 | 5 | 6 | 7 (1sb) | # of bytes | |
|---|---|---|---|---|---|---|---|---|---|
| ef | extType = 0x11 | | | | | | | 1 | Octet M |
| extLen = 0x02 (1 word) | | | | | | | | 1 | M+1 |
| RIM RS symbol ind | | | | | | | | 1 | M+2 |
| phaseDecomplq | | | | | | | | 4 | M+3 |
| phaseDecomplq | | | | | | | | 1 | M+7 |

<u>1140</u>

| 0 (msb) | 1 | 2 | 3 | 4 | 5 | 6 | 7 (1sb) | # of bytes | |
|---|---|---|---|---|---|---|---|---|---|
| ef | extType = 0x11 | | | | | | | 1 | Octet M |
| extLen = 0x02 (1 word) | | | | | | | | 1 | M+1 |
| RIM RS symbol ind | | | | | | | | 1 | M+2 |
| phaseDifference or rimCenterFreq | | | | | | | | 4 | M+3 |
| reserved | | | | | | | | 1 | M+7 |

FIG. 11

210
DU

220
RU

S1201

GENERATE M-PLANE
MESSAGE RELATED
TO RIM-RS

M-PLANE MESSAGE
(S1203)

S1211

GENERATE C-PLANE
MESSAGE INCLUDING
IE FOR RIM-RS

C-PLANE MESSAGE
(S1213)

S1215

CP POSITION ADJUSTMENT
AND PHASE DIFFERENCE
COMPENSATION

FIG. 12

1310

| 0 (msb) | 1 | 2 | 3 | 4 | 5 | 6 | 7 (1sb) | # of bytes | |
|---|---|---|---|---|---|---|---|---|---|
| Section Type 3 : PRACH & mixed-numerology | | | | | | | | | |
| transport header, see clause 5. 1. 3 | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | | startSymbolId | | | | | 1 | Octet 12 |
| numberOfsections | | | | | | | | 1 | Octet 13 |
| sectionType = 3 | | | | | | | | 1 | Octet 14 |
| udCompHdr | | | | | | | | 2 | Octet 15 |
| reserved | | | | | | | | 1 | Octet 16 |
| sectionId | | | | | | | | 1 | Octet 17 |
| sectionId | | | | rb | symInc | startPrbc | | 1 | Octet 18 |
| startPrbc | | | | | | | | 1 | Octet 19 |
| numPrbc | | | | | | | | 1 | Octet 20 |
| reMask[11:4] | | | | | | | | 1 | Octet 21 |
| reMask[3:0] | | | | numSymbol | | | | 1 | Octet 22 |
| ef | beamId[14:8] | | | | | | | 1 | Octet 23 |
| beamId[7:0] | | | | | | | | 1 | Octet 24 |
| rimrsSymbolInd[7:0] (optional, not always present) | | | | | | | | 1 | Octet 25 |

1311

1320

| | | | | | | | | | |
|---|---|---|---|---|---|---|---|---|---|
| sectionId | | | | | | | | 1 | Octet 21 |
| sectionId | | | | rb | symInc | startPrbc | | 1 | Octet 22 |
| startPrbc | | | | | | | | 1 | Octet 23 |
| numPrbc | | | | | | | | 1 | Octet 24 |
| reMask[11:4] | | | | | | | | 1 | Octet 25 |
| reMask[3:0] | | | | numSymbol | | | | 1 | Octet 26 |
| ef | beamId[14:8] | | | | | | | 1 | Octet 27 |
| beamId[7:0] | | | | | | | | 1 | Octet 28 |
| freqOffset | | | | | | | | 3 | Octet 29 |
| reserved (8 bits) | | | | | | | | 1 | Octet 32 |
| Section Extensions as indicated by "ef" | | | | | | | | var | Octet 33 |
| . . . | | | | | | | | | |
| sectionId | | | | | | | | 1 | Octet N |
| sectionId | | | | rb | symInc | startPrbc | | 1 | N+1 |

FIG. 13

210
DU

220
RU

S1401

GENERATE M-PLANE
MESSAGE RELATED
TO RIM-RS

M-PLANE MESSAGE
(S1403)

S1411

GENERATE U-PLANE
MESSAGE INCLUDING
IE FOR RIM-RS

U-PLANE MESSAGE
(S1413)

S1415

CP POSITION ADJUSTMENT
AND PHASE DIFFERENCE
COMPENSATION

FIG. 14

1500

| 0 (msb) | 1 | 2 | 3 | 4 | 5 | 6 | 7 (1sb) | # of bytes | |
|---|---|---|---|---|---|---|---|---|---|
| Section Type 3 : PRACH & mixed-numerology | | | | | | | | | |
| transport header, see clause 5. 1. 3 | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | | startSymbolid | | | | | 1 | Octet 12 |
| sectionId | | | | | | | | 1 | Octet 13 |
| sectionId | | | | rb | symInc | startPrbc | | 1 | Octet 14 |
| startPrbc | | | | | | | | 1 | Octet 15 |
| numPrbc | | | | | | | | 1 | Octet 16 |
| udCompHdr (not always present) | | | | | | | | 0/1 | Octet 17 |
| reserved (not always present) | | | | | | | | 0/1 | Octet 18 |
| udCompLen (not always present) | | | | | | | | 0/2 | Octet 17/19 |
| rimrsSymbolind[7:0] (optional, not always present) | | | | | | | | 1 | Octet 17/19/21 |
| udCompParam (not always present) | | | | | | | | 0/1/2 | Octet 17/19/21 |
| iSample (1st RE in the PRB) | | | | | | | | 1* | K=17/19/20/21/23 |
| qSample (1st RE in the PRB) | | | | | | | | 1* | K+1* |
| . . . | | | | | | | | | |
| iSample (12th RE in the PRB) | | | | | | | | 1* | K+22* |
| qSample (12th RE in the PRB) | | | | | | | | 1* | K+23* |
| udCompParam (not always present) | | | | | | | | 0/1/2 | K+24* |
| iSample (1st RE in the PRB) | | | | | | | | 1* | K+24/25/26* |
| qSample (1st RE in the PRB) | | | | | | | | 1* | K+25/26/27* |
| . . . | | | | | | | | | |
| iSample (12th RE in the PRB) | | | | | | | | 1* | K+46/47/48* |
| qSample (12th RE in the PRB) | | | | | | | | 1* | K+47/48/49* |

1511

FIG. 15

## INTERNATIONAL SEARCH REPORT

| International application No. |
|---|
| **PCT/KR2023/008713** |

| A. | CLASSIFICATION OF SUBJECT MATTER |
|---|---|

**H04L 27/26**(2006.01)i; **H04L 27/20**(2006.01)i; **H04L 5/00**(2006.01)i; **H04J 11/00**(2006.01)i; **H04W 72/23**(2023.01)i

According to International Patent Classification (IPC) or to both national classification and IPC

| B. | FIELDS SEARCHED |
|---|---|

Minimum documentation searched (classification system followed by classification symbols)

H04L 27/26(2006.01); H03M 7/30(2006.01); H04B 17/345(2015.01); H04B 17/382(2015.01); H04J 11/00(2006.01); H04L 12/24(2006.01); H04L 29/06(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RIM(remote interference management)-RS(reference signal), 프론트홀(fronthaul), RU(radio unit), DU(distributed unit), 제어 평면(control plane, C-plane), CP(cyclic prefix), 위상(phase)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022-015598 A1 (QUALCOMM INCORPORATED) 20 January 2022 (2022-01-20)<br>See paragraphs [0083]-[0088]; claims 11, 17 and 20; and figures 8A-9. | 1-15 |
| Y | KR 10-2022-0046181 A (SAMSUNG ELECTRONICS CO., LTD.) 14 April 2022 (2022-04-14)<br>See paragraph [0069]; and claims 1 and 9. | 1-15 |
| A | US 2022-0006552 A1 (APPLE INC.) 06 January 2022 (2022-01-06)<br>See paragraphs [0110]-[0113]; and claims 1-8. | 1-15 |
| A | WO 2022-046980 A2 (QUALCOMM INCORPORATED) 03 March 2022 (2022-03-03)<br>See paragraphs [0216]-[0226]. | 1-15 |
| A | US 2022-0173819 A1 (CHINA MOBILE COMMUNICATION CO., LTD. RESEARCH INSTITUTE et al.) 02 June 2022 (2022-06-02)<br>See claims 1-6 and 10. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 October 2023** | **19 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/008713**

| Patent document cited in search report | | | Publication date (day/month/year) | Patent family member(s) | | | Publication date (day/month/year) |
|---|---|---|---|---|---|---|---|
| WO | 2022-015598 | A1 | 20 January 2022 | CN | 115804013 | A | 14 March 2023 |
| | | | | EP | 4183050 | A1 | 24 May 2023 |
| | | | | US | 2023-0199557 | A1 | 22 June 2023 |
| KR | 10-2022-0046181 | A | 14 April 2022 | US | 2023-0239112 | A1 | 27 July 2023 |
| | | | | WO | 2022-075724 | A1 | 14 April 2022 |
| US | 2022-0006552 | A1 | 06 January 2022 | CN | 112956153 | A | 11 June 2021 |
| | | | | CN | 113196697 | A | 30 July 2021 |
| | | | | EP | 3874666 | A1 | 08 September 2021 |
| | | | | EP | 3874666 | A4 | 20 July 2022 |
| | | | | US | 2021-0385035 | A1 | 09 December 2021 |
| | | | | US | 2023-0014343 | A1 | 19 January 2023 |
| | | | | WO | 2020-068625 | A1 | 02 April 2020 |
| | | | | WO | 2020-092820 | A1 | 07 May 2020 |
| WO | 2022-046980 | A2 | 03 March 2022 | WO | 2022-046980 | A3 | 07 April 2022 |
| US | 2022-0173819 | A1 | 02 June 2022 | CN | 111756492 | A | 09 October 2020 |
| | | | | CN | 111756492 | B | 22 July 2022 |
| | | | | EP | 3952181 | A1 | 09 February 2022 |
| | | | | JP | 2022-528085 | A | 08 June 2022 |
| | | | | WO | 2020-192764 | A1 | 01 October 2020 |

Form PCT/ISA/210 (patent family annex) (July 2022)